(19) Europäisches Patentamt
European Patent Office
Office européen des brevets

(11) **EP 2 024 438 B1**

(12) **FASCICULE DE BREVET EUROPEEN**

(45) Date de publication et mention
de la délivrance du brevet:
**27.01.2010 Bulletin 2010/04**

(21) Numéro de dépôt: **07729749.7**

(22) Date de dépôt: **31.05.2007**

(51) Int Cl.:
*C08L 83/04* (2006.01)     *C09D 183/04* (2006.01)

(86) Numéro de dépôt international:
**PCT/EP2007/055347**

(87) Numéro de publication internationale:
**WO 2007/138099 (06.12.2007 Gazette 2007/49)**

(54) **COMPOSITION SILICONE RETICULABLE POUR LA REALISATION DE REVETEMENTS ANTI-ADHERENTS POUR FILMS POLYMERES**

VERNETZBARE SILICIUMZUSAMMENSETZUNG ZUR HERSTELLUNG VON ANTIHAFTBESCHICHTUNGEN FÜR POLYMERFOLIEN

CROSSLINKABLE SILICON COMPOSITION FOR PRODUCING NON-STICK COATINGS FOR POLYMER FILMS

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **31.05.2006 FR 0651992**

(43) Date de publication de la demande:
**18.02.2009 Bulletin 2009/08**

(73) Titulaire: **Bluestar Silicones France SAS
69003 Lyon (FR)**

(72) Inventeurs:
• **WHITE, John**
  **F-69380 Chessy les Mines (FR)**
• **DUFFY, Sean**
  **F-69008 Lyon (FR)**
• **FEDER, Michel**
  **F-69100 Villeurbanne (FR)**
• **POUCHELON, Alain**
  **F-69330 Meyzieu (FR)**

(74) Mandataire: **Cabinet Plasseraud
52, rue de la Victoire
75440 Paris Cedex 09 (FR)**

(56) Documents cités:
**EP-A1- 0 553 840     EP-A2- 0 851 000
FR-A1- 2 450 642     US-A- 5 108 791**

## Description

Le domaine de l'invention est celui des compositions silicones réticulables ou réticulées, susceptibles d'être utilisées, notamment, pour former un revêtement ou film hydrofuge et anti-adhérent pour supports souples de préférence sous forme de films en polymère naturel ou synthétique.

Ces compositions silicones anti-adhérentes, durcissables sont appliquées sur de tels supports, de manière à faciliter l'enlèvement de matières adhésives contrecollées de manière réversible sur ces supports.

Plus précisément, l'invention se rapporte aux compositions silicones du type de celles comprenant :

► des polyorganosiloxanes (POS) fonctionnalisés porteurs, sur une même molécule ou non de motifs Si-H $[(M)_{a'\geq 0}(M^H)_{b'\geq 0}(D^H)_{c'\geq 0}(D)_{d'\geq 0}]$ et Si-alcényle, de préférence Si-vinyle(Vi) $[(M)_{a''\geq 0}(M^{Vi})_{b''\geq 0}(D^{Vi})_{c''\geq 0}(D)_{d''\geq 0}]$; les motifs Si-H étant susceptibles de réagir avec les motifs Si-alcényle par réaction d'addition ;

► un catalyseur métallique approprié de préférence platinique ;

► éventuellement au moins un système modulateur d'adhérence, par exemple à base de résine silicone comprenant des motifs siloxyles Q: $(SiO_{4/2})$ et/ou T: $(RSiO_{3/2})$ ;

► éventuellement d'autres additifs (charges, accélérateurs, inhibiteurs, pigments, tensioactifs...).

L'invention concerne également la préparation de ce type de compositions silicones.

L'invention concerne également les procédés de réalisation de revêtements silicone e.g. hydrofuges et/ou anti-adhérents pour supports souples (e.g. films polymère), à partir des compositions sus-visées.

Ces compositions silicones liquides sont appliquées sur les films supports dans des dispositifs industriels d'enduction comportant des cylindres fonctionnant à très grande vitesse (par exemple 600 m/min). Il est clair que dans ces procédures d'enduction à très grande vitesse, la viscosité de la composition silicone liquide d'enduction doit être minutieusement adaptée aux conditions opératoires d'enduction.

En pratique, le taux de dépôt de silicone anti-adhérent est compris entre 0,1 et 2 de préférence 0,3 et 1 g/m$^2$, ce qui correspond à des épaisseurs de l'ordre du micromètre.

Une fois appliquée sur le support souple, la composition silicone réticule pour former un revêtement solide en silicone (e.g. élastomère) anti-adhérent et/ou hydrofuge.

Compte tenu des cadences industrielles d'enduction à très haute vitesse, la cinétique de réticulation doit être extrêmement rapide pour conduire à une réticulation correcte, c'est-à-dire que les films silicones anti-adhérents doivent être suffisamment réticulés pour pouvoir remplir au mieux leur fonction d'anti-adhérence et posséder les qualités mécaniques souhaitables. L'appréciation de la qualité de la réticulation du film silicone anti-adhérent peut notamment se faire au travers du dosage des composés extractibles non réticulés, dont la quantité doit être la plus réduite possible. Par exemple, le taux d'extractibles est préférablement inférieur à 5%, dans des conditions industrielles normales de réticulation.

L'anti-adhérence de la face externe libre du revêtement silicone s'exprime au travers de la force de décollement, qui doit être faible et contrôlée, pour l'élément destiné à être disposé sur le support revêtu par le film silicone anti-adhérent. Classiquement, cet élément peut être la face adhésive d'une étiquette ou d'un ruban du même nom.

Ainsi, outre cette anti-adhérence faible et contrôlée, l'adhérence du revêtement silicone sur son support doit être très élevée. Cette propriété d'adhérence s'apprécie par exemple à l'aide du test de métier de "rub off', qui consiste à frotter la surface du revêtement avec le doigt et à mesurer le nombre de passages successifs qui conduisent à une dégradation du revêtement.

Il importe également que ces compositions silicones d'enduction, réticulables par hydrosilylation e.g. Si-H / Si-Vi, aient une durée de vie à température ambiante la plus longue possible, lorsqu'elles sont sous forme de bain d'enduction dans les machines industrielles d'enduction.

Les supports souples revêtus d'un film silicone anti-adhérent peuvent être par exemple:

- un ruban adhésif dont la face interne est enduite d'une couche d'adhésif sensible à la pression et dont la face externe comporte le revêtement silicone anti-adhérent ;

- ou un papier ou un film polymère de protection de la face adhésive d'un élément autocollant ou adhésif sensible à la pression ;

- ou un film polymère du type polyoléfine (polychlorure de vinyle (PVC), PolyPropylène ou Polyéthylène) ou de type polyester (PolyEthylèneTéréphtalate -PET-).

Dans le cadre de la présente invention, on s'intéresse plus particulièrement aux compositions silicones liquides d'enduction de supports souples polymères (polyester e.g. en PET). En effet, l'un des avantages des films PET tient à leur très faible épaisseur (20 $\mu$m) qui permet de limiter significativement l'encombrement des rouleaux de film.

De plus, pour des raisons évidentes de sécurité de manipulation et de toxicité, on vise dans la présente invention, des compositions silicone sans solvant.

Or, pour être suffisamment durcies/réticulées, ces compositions silicones liquides sans solvants réticulant par polyaddition (Si-H/Si-alcényle-e.g. vinyle-), doivent préférablement être réticulées sous activation thermique. Ces conditions réactionnelles ne conviennent pas à certains supports thermosensibles tels que ceux comprenant du polyéthylène (PE), comme par exemple les films en PE ou les papiers couchés avec du PE, ou ceux du type papiers imprimables thermiquement. Ces supports thermosensibles ne supportent pas d'être chauffés à des températures supérieures à 90˚C. Toute la difficulté est donc d'obtenir, pour ces supports thermosensibles, une réticulation correcte à basse température, par exemple inférieure ou égale à 110˚C (85-90˚C).

En revanche, pour des supports souples en polyester, par exemple en PET, il est possible de mettre en oeuvre des températures de réticulation (ou d'activation) thermique plus élevées, mais vu les très grandes vitesses de revêtement industriel, le temps de séjour dans le four est très bref, par exemple de l'ordre de 2s. L'obtention de revêtements silicone correctement réticulés reste donc également un souci pour les supports polyester, notamment en PET.

En outre, il se trouve que la plupart des compositions silicone d'enduction utilisées à ce jour pour des supports souples en PET, contiennent des solvants organiques. Il serait donc extrêmement souhaitable de proposer des compositions silicone d'enduction sans solvant, en particulier pour des supports en polyester, e.g. en PET, réticulant/durcissant correctement dans les conditions industrielles d'enduction.

Au-delà de cet aspect, il s'impose que, d'un point de vue économique, ces compositions silicone d'enduction sans solvant, en particulier pour des supports en polymère, notamment en polyester, e.g. en PET, puissent être utilisées sur des équipements industriels standard d'enduction adaptés à des supports souples en papier. Cela suppose que lesdites compositions aient une viscosité relativement basse (par exemple inférieure ou égale à 1000 mPa.s) pour faciliter leur manipulation, pour avoir une bonne qualité d'enduction et pour réduire le problème de formation de brouillard ("misting") qui apparaît aux très grandes vitesses d'enduction industrielles.

Une autre contrainte à prendre en compte pour la formulation des compositions silicone liquides d'enduction est que le coefficient de friction du revêtement d'élastomère silicone réticulé soit contrôlable, de manière à faciliter les opérations d'enroulement/déroulement et de découpage ("échenillage") en feuilles des supports souples en polymère (notamment en polyester tel que le PET), utiles comme "liners" pour étiquettes.

Il est important pour cette application que le revêtement silicone élastomère ne nuise ni à l'aspect lisse, ni à la transparence, ni aux propriétés mécaniques du support. L'aspect lisse est nécessaire pour un échenillage de précision à très grande vitesse. La transparence est impérative pour l'inspection de la régularité du film toujours à très grande vitesse, à l'aide de détecteurs optiques.

Au-delà des propriétés évoquées ci-dessus pour les supports polymère (notamment polyester, e.g. PET), il convient avant tout que l'adhérence ou l'accrochage du revêtement silicone sur le support (traduite par la résistance à l'abrasion "rub-off") soit optimale et stable dans le temps.

Et puisqu'il s'agit d'un revêtement anti-adhérent, le contrôle de la force de décollement est également important. Avantageusement, ce contrôle doit être effectif à basse et à haute vitesse. L'équilibre entre les forces de décollement à basse vitesse et les forces de décollement à haute vitesse est appelé communément le profil d'anti-adhérence. Ce profil d'anti-adhérence est dépendant de plusieurs facteurs tels que le matériau des étiquettes, le support souple polymère, l'adhésif et la formulation du revêtement silicone. S'agissant notamment des supports en polyester, un problème bien connu est que la force de décollement à haute vitesse est trop basse, lorsque des compositions silicone sans solvant à réticulation thermique sont employées. Des améliorations sont donc souhaitables à cet égard.

Or, les propositions techniques connues à ce jour ne satisfont pas au cahier des charges évoqué ci-dessus, en particulier vis-à-vis des supports souples polymères, notamment en polyester (e.g. PET).

Par exemple, le brevet US-B-4,774,111 divulgue notamment des compositions silicone anti-adhérentes pour supports papier comprenant des POS linéaires $M^{Vi}D_nM^{Vi}$ de viscosité 100-100.000 mPa.s, de préférence 100-5.000 mPa.s, des POS linéaires à motifs Si-H, un catalyseur au platine et, entre autres, un inhibiteur de réticulation.

La demande US-A-2004/0161618 décrit des compositions silicone anti-adhérentes ayant une adhésion améliorée sur supports papier ou polymère. Ces compositions comprennent un POS de type MDM porteur de greffons fonctionnels de type époxy, oxirane ou carboxy actifs pour promouvoir l'accrochage du revêtement silicone, ainsi que des POS linéaires alcénylés $M^{Vi}_{2-5} D_{50-1000} T_{a'''\geq 0} M_{0-0,5}$, des POS linéaires à motifs Si-H, un catalyseur au platine et, entre autres, un inhibiteur de réticulation.

La demande WO-A-2004/046267 divulgue un revêtement silicone anti-adhérent ayant des propriétés améliorées d'ancrage sur supports de type "liners" PET, sans que cela ne nuise à la réticulation (durcissement). La composition silicone réticulable à l'origine de ce revêtement, contient une résine POS alcénylée $M^{Vi} D_{15-995} Q_{a'''\geq 1}$, des POS linéaires à motifs Si-H, un POS non alcénylée de type PolyDiMéthylSiloxane de viscosité 10-200.000 mPa.s, e.g 100, 13.500, 60.000 mPa.s, un catalyseur au platine et, entre autres, un inhibiteur de réticulation

Dans ce contexte, la présente invention a pour objectif essentiel de proposer de nouvelles compositions silicones liquides d'enduction, sans solvant, réticulables en revêtement anti-adhérent et/ou hydrofuge pour support souple, de manière instantanée et en conduisant à des revêtements silicones réticulés de très bonne qualité, en particulier en termes d'accrochage/adhérence sur le support "rub-off élevé" et de profil d'anti-adhérence (force de décollement à haute vitesse suffisamment élevée).

Un autre objectif essentiel de l'invention est de proposer de nouvelles compositions silicones liquides d'enduction, sans solvant, réticulables rapidement en revêtement anti-adhérent et/ou hydrofuge pour supports souples, en particulier pour des films polymère, par exemple en polyester du type PET, le revêtement réticulé obtenu ayant:

■ d'une part, une réticulation suffisante pour avoir des propriétés mécaniques et d'adhérence du revêtement convenables,
■ et, d'autre part, un faible taux d'extractibles pour une bonne permanence des propriétés antiadhérentes favorable en particulier pour le découpage ("échenillage") en feuilles desdits films-supports du type "liners" pour étiquettes.

Un autre objectif essentiel de l'invention est de proposer de nouvelles compositions silicones liquides d'enduction, sans solvant, réticulables en revêtement anti-adhérent et/ou hydrofuge pour supports souples, en particulier pour des films polymère, par exemple en polyester du type PET, cette réticulation s'effectuant rapidement à basse température, de manière instantanée, ces compositions étant par ailleurs dotées de longues durées de vie en bain, à température ambiante.

Un autre objectif essentiel de l'invention est de proposer de nouvelles compositions silicones liquides d'enduction, sans solvant, réticulables en revêtement anti-adhérent et/ou hydrofuge pour supports souples, en particulier pour des films polymère, par exemple en polyester du type PET, ces compositions ayant des viscosités faibles idoines pour des procédés de réalisation de revêtements anti-adhérents à haute vitesse, y compris sur des équipements standards prévus pour des supports en papier, et ce sans générer de problèmes rédhibitoires de formation de brouillards ("misting").

Un autre objectif essentiel de l'invention est de proposer de nouvelles compositions silicone liquides d'enduction, réticulables en revêtement anti-adhérent et/ou hydrofuge pour support souple, faciles à préparer et économique.

Un autre objectif essentiel de l'invention est de proposer un nouveau procédé de réalisation d'un revêtement, hydrofuge et anti-adhérent sur un support, de préférence un film polymère, plus préférentiellement un film polymère en polyester (par exemple en PET) ayant les propriétés recherchées d'accrochage (("rub-off"), de contrôle du profil de la force de décollement, de faible taux d'extractibles) et de coefficient de friction approprié, le tout avec une composition de départ sans solvant, de viscosité compatible avec le revêtement à haute vitesse sans "misting".

Un autre objectif essentiel de l'invention est de proposer un nouveau procédé pour augmenter l'accrochage (i.e la résistance à l'abrasion) d'un revêtement silicone réticulé/durci, hydrofuge et anti-adhérent, appliqué sur un support, de préférence un film polymère, plus préférentiellement un film polymère en polyester, et obtenu à partir d'une composition silicone susceptible de réticuler/durcir par polyaddition, tout en conservant voire en améliorant le contrôle du profil de la force de décollement, le faible taux d'extractibles) et le coefficient de friction approprié, le tout avec une composition de départ sans solvant, de viscosité compatible avec le revêtement à haute vitesse sans "misting".

Un autre objectif essentiel de l'invention est de proposer une nouveau support, de préférence un film polymère, plus préférentiellement un film polymère en polyester (PET), présentant au moins un revêtement, hydrofuge, anti-adhérent, à base d'une composition silicone réticulée/durcie par polyaddition, et présentant d'excellentes propriétés d'accrochage (("rub-off"), de contrôle du profil de la force de décollement, de dureté (% extractibles) et de coefficient de friction approprié, le tout en partant d'une composition de départ sans solvant, de viscosité compatible avec le revêtement à haute vitesse sans "misting".

Ces objectifs, parmi d'autres, sont atteints par la présente invention qui concerne en premier lieu une nouvelle composition silicone susceptible de réticuler/durcir par polyaddition, pour former un revêtement, hydrofuge et anti-adhérent pour supports de préférence sous forme de films polymère, **caractérisée en ce qu**'elle comprend :

\* (A) une composante silicone alcénylée contenant au moins une huile silicone fonctionnelle comprenant au moins un PolyOrganoSiloxane (POS) comprenant des motifs de formule :

$$W_a Z_b SiO_{\frac{4-(a+b)}{2}} \qquad (I.1)$$

dans laquelle :

- W représente indépendamment un groupe fonctionnel alcényle, de préférence en C2-C6, et, plus préférentiellement encore vinyle ou allyle,
- Z représente indépendamment un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,

- a est 1 ou 2, b est 0, 1 ou 2 et a + b est compris entre 1 et 3;

cette composante silicone alcénylée A comprenant une fraction F1 et une fraction F2, différente l'une de l'autre,

.la fraction F1 comprenant au moins une huile silicone alcénylée choisie dans le groupe comprenant au moins un POS linéaire présentant, par molécule, au moins deux groupes alcényle (de préférence en $C_2$-$C_6$ ) lié au silicium,

- de formule linéaire moyenne : $M^w_r(D)_q(D^w)_q \cdot M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r, r'=0, 1 ou 2 avec r+r'=2 ;
- de viscosité v4 (en mPa.s à 25°C) définie comme suit:
  $75 \leq v4 \leq 4.000$, de préférence $100 \leq v4 \leq 2.000$, et mieux encore $100 \leq v4 \leq 1.000$
- et de rapport massique $R^w$ (% en poids) des motifs Si-alcényle sur la masse totale du POS de la fraction F1 de A est défini comme suit:
  $0,1 \leq R^w \leq 3,5$, de préférence $0,2 \leq R^w \leq 3$, et mieux encore $0,5 \leq R^w \leq 3$,

.F2 ayant une activité de promotion de l'adhérence sur les supports (donc de la résistance à l'abrasion) des revêtements anti-adhérence obtenus par durcissement/réticulation de la composition,
.et F2 étant formée par au moins une huile silicone alcénylée choisie dans le groupe comprenant:

→ ($A_{2.1}$) les huiles silicone monoalcénylées comprenant chacune au moins un POS linéaire présentant, par molécule, une seule extrémité porteuse d'un seul groupe alcényle (de préférence en $C_2$-$C_6$ ) lié au silicium, et de formule linéaire moyenne $M^w D_m M$ dans laquelle M, $M^w$ et D sont des motifs siloxy de formule (I.1) avec pour M : a=0, b=3 ; $M^w$ : a=1, b=2 et pour D: a=0, b=2; et m est un entier naturel supérieur ou égal à 150;
→ ($A_{2.2}$) les huiles silicone longues comprenant chacune au moins un POS linéaire présentant, par molécule, à chacune de ses extrémités un groupe alcényle (de préférence en $C_2$-$C_6$ ) lié au silicium et de formule linéaire moyenne $M^w D_n M^w$ dans laquelle $M^w$ et D sont des motif siloxy de formule (I.1) avec pour $M^w$ : a=1, b=2 et pour D: a=0, b=2; et n est un entier naturel supérieur ou égal à 250 ; la viscosité v2 desdites huiles $A_{2.2}$ étant comprise entre 3000 et 200000 mPa.s;
→ ($A_{2.3}$) les huiles silicone "faiblement" alcénylées comprenant chacune au moins un POS linéaire présentant, par molécule, au moins un groupe alcényle (de préférence en $C_2$-$C_6$ ) lié au silicium, de formule linéaire moyenne $(M^w)_x(M)_y(D)_p(D^w)_{p'}$ dans laquelle M, $M^w$ et D sont des motifs siloxy de formule (I.1) avec pour M : a=0, b=3, $M^w$ : a=1, b=2 et pour D: a=0, b=2, $D^w$: a=1, b=1; p, p' sont des entiers naturels; x,y=0,1 ou 2, x+y=2, le rapport massique $R^w$ (% en poids) des motifs alcényle sur la masse totale du POS $A_{2.3}$ est inférieur ou égal à 0,5, de préférence à 0,3 et mieux encore à 0,2;
→ et leurs mélanges;

\* (B) au moins une huile silicone réticulante comprenant au moins un POS hydrogéné présentant, par molécule, au moins trois atomes d'hydrogène liés au silicium;
\* (C) au moins un catalyseur composé d'au moins un métal appartenant au groupe du platine;
\* (D) éventuellement au moins un additif promoteur d'accrochage;
\* (E) éventuellement au moins un inhibiteur de réticulation;
\* (F) éventuellement, un système modulateur d'adhérence;
\* (G) éventuellement, au moins un diluant;
\* (H) éventuellement, au moins un autre additif fonctionnel, notamment anti-misting.

Il est du mérite des inventeurs d'avoir judicieusement sélectionné les constituants de la composante silicone alcénylée A, et en particulier, de la fraction F2 de cette nouvelle composition silicone, de façon à réaliser des revêtements anti-adhérents performants sur des supports polymère, notamment polyester, par exemple PET. Grâce à l'invention, les revêtements obtenus ont un excellent accrochage ("rub-off"), une force de décollement suffisamment élevée à grande vitesse, de bonnes propriétés mécaniques et physiques (aspect lisse, transparence et bon coefficient de friction).
Les performances atteintes grâce à l'invention en termes de qualité de la réticulation par polyaddition : réactivité/niveau de réticulation/cinétique, sont tout à fait intéressantes, comme en témoigne les faibles taux d'extractibles obtenus, pour ce qui concerne la réactivité et le niveau de réticulation.
Il est à noter que les propriétés d'accrochage sur support sont d'autant plus positives, qu'elles perdurent pendant de longues durées, par exemple au moins deux semaines, et ce même dans des conditions sévères, en particulier d'humidité et/ou de température.

Ces caractéristiques avantageuses sont particulièrement exploitables pour réaliser l'anti-adhérence de supports polymère, notamment polyester, par exemple PET, utiles comme "liners" d'étiquettes autocollantes (adhésif sensible à la pression), se présentant sous forme de rouleaux ou de bobines de films e.g. fabriqués à très grande vitesse. Ceci est d'autant plus intéressant que ces résultats sont obtenus avec une composition silicone, dont le comportement rhéologique de la composition silicone n'est pas affecté (pas trop visqueuse), de sorte qu'elle est parfaitement apte à être enduite sur tout support et notamment sur tout support souple et qu'elle est peu ou pas sujette au "misting" dans des conditions industrielles d'enduction.

En outre, les compositions silicones d'enduction selon l'invention peuvent avantageusement être "sans solvant". Cela signifie qu'elles sont exemptes de solvant et, en particulier, sans solvant organique. On conçoit aisément les avantages que cela procure s'agissant de l'hygiène et de la sécurité.

De préférence, la composition selon l'invention est **caractérisée en ce que** la fraction F1 de la composante silicone alcénylée A représente au moins 30% en poids de A, de préférence au moins 50%.

F1 est pondéralement l'un des constituants principaux de la composition selon l'invention.

Pour optimiser les performances de l'invention, il peut être préférable que les huiles $A_{2.1}$ $A_{2.2}$ $A_{2.3}$ soient choisies de telle sorte que dans leurs formules simplifiées: m/2, n et p/p' sont respectivement supérieur ou égal à 70 , de préférence supérieur ou égal à 100.

Outre la viscosité v2 de l'huile (2.2) de F2 qui est un paramètre important de l'invention, il est également avantageux que la viscosité, respectivement v1, v3, des huiles $A_{2.1}$ et $A_{2.3}$ (en mPa.s à 25˚C) soit définie comme suit:

→ 400 ≤ v1 ≤ 60000, de préférence 500 ≤ v1 ≤ 50.000, et mieux encore 800 ≤ v1 ≤ 30000;
→ 3000 ≤ v2 ≤ 180000, de préférence 5000 ≤ v2 ≤ 100000, et mieux encore 5000 ≤ v2 ≤ 3000;
→ 800 ≤ v3 ≤ 15000, de préférence 1000 ≤ v3 ≤ 10000, et mieux encore 1000 ≤ v3 ≤ 5000.

Toutes les viscosités dont il est question dans le présent exposé correspondent à une grandeur de viscosité dynamique à 25˚C dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

I1 est apparu particulièrement judicieux conformément à l'invention, que la composition ait un ratio molaire Si-H / Si-alcényle, tel que :

$$1{,}0 \ \le \text{Si-H/Si-alcényle} \ \le \ 7$$

de préférence

$$1{,}5 \ \le \ \text{Si-H/Si-alcényle} \ \le \ 5.$$

Selon une modalité intéressante de l'invention, le rapport massique $R^w$ (% en poids) des motifs Si-alcényle sur la masse totale de F2 à activité de promotion de l'accrochage, est défini comme suit:

→ pour $A_{2.1}$

$$0{,}05 \le R^w \le 0{,}2; \text{ de préférence } 0{,}07 \le R^w \le 0{,}15;$$

→ pour $A_{2.2}$

$$0{,}05 \le R^w \le 0{,}25; \text{ de préférence } 0{,}1 \le R^w \le 0{,}2.$$

Avantageusement:

■ A2.1 est, par exemple, choisi dans le groupe comprenant les polydiméthylsiloxanes ayant à la fois des extrémités (diméthyl)(vinyl)silyle et des extrémités (triméthyl)(vinyl)silyle;

■ A2.2 est, par exemple, choisi dans le groupe comprenant les polydiméthylsiloxanes ayant deux extrémités (diméthyl)(vinyl)silyle;

■ A2.3 est, par exemple, choisi dans le groupe comprenant les poly(diméthylsiloxy)(methyl-vinylsiloxy)siloxanes à extrémités (diméthyl)-(vinyl)silyle.

Le polyorganosiloxane (I.1) de la fraction F1 de la composante silicone alcénylée peut présenter une structure linéaire, ramifiée ou cyclique. Son degré de polymérisation est, par exemple, compris entre 2 et 5 000.

Des exemples de motifs siloxyle de formule (I.1) sont le motif vinyldiméthylsiloxane, le motif vinylphénylméthylsiloxane et le motif vinylsiloxane.

Des exemples de polyorganosiloxanes (I.1) sont les diméthylpolysiloxanes à extrémités diméthylvinylsilyle, les copolymères méthylvinyldiméthylpolysiloxanes à extrémités triméthylsilyle, les copolymères méthylvinyldiméthylpolysiloxanes à extrémités diméthylvinylsilyle, les méthylvinylpolysiloxanes cycliques.

Les huiles vinylées sont des produits du commerce habituellement mises en oeuvre pour préparer des compositions durcissables antiadhérentes (e.g. brevet US-A-4,623,700). Les huiles à groupements alcényle plus lourds ou alcényloxyalkylène sont décrites notamment dans les brevets EP-B-0 219 720 et EP-A-0 454 130.

S'agissant de l'huile silicone réticulante B, elle peut par exemple comprendre au moins un polyorganosiloxane (II.2) comportant des motifs siloxyle de formule :

$$H_d L_e SiO_{\frac{4-(d+e)}{2}} \qquad (I.2)$$

dans laquelle :

- L est un groupe hydrocarboné monovalent, exempt d'action défavorable sur l'activité du catalyseur et choisi, de préférence, parmi les groupes alkyles ayant de 1 à 8 atomes de carbone inclus et, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- d est 1 ou 2, e est 0, 1 ou 2, d + e a une valeur comprise entre 1 et 3.

La viscosité dynamique $\eta_d$ (à 25° C) de ce polyorganosiloxane (I.2) $\geq$ à 5 de préférence à 10 et, plus préférentiellement encore, est comprise entre 20 et 1000 mPa.s.

Le polyorganosiloxane (1.2) peut présenter une structure linéaire, ramifiée ou cyclique. Le degré de polymérisation est supérieur ou égal à 2. Plus généralement, il est inférieur ou égal à 5.000.

Des exemples de motifs de formule (I.2) sont :

M' : $H(CH_3)_2SiO_{1/2}$, D' : $HCH_3SiO_{2/2}$, D' : $H(C_6H_5)SiO_{2/2}$.

Des exemples de polyorganosiloxane (1.2), c'est-à-dire d'huile réticulante (B) sont :

- M'DD' : les diméthylpolysiloxanes à extrémités hydrogénodiméthylsilyle, les poly(diméthylsiloxy)(méthylhydrogénosiloxy) $\alpha,\omega$-diméthylhydrogéno-siloxane,
- MDD' : les copolymères à motifs diméthyl-hydrogénométhylpolysiloxane à extrémités triméthylsilyle,
- M'DD : les copolymères à motifs diméthyl-hydrogénométhylpolysiloxane à extrémités hydrogénodiméthylsilyle,
- MD' : les hydrogénométhylpolysiloxanes à extrémités triméthylsilyle,
- D'$_4$ : les hydrogénométhylpolysiloxanes cycliques.

Des exemples de ces huiles réticulantes (B) sont donnés dans le brevet US-A-4,623,700 et le brevet européen EP-B-0 219 720.

De préférence, l'huile silicone réticulante B comprend :

- au moins un POS(B1) de formule linéaire moyenne suivante:

$$M_\alpha M'_\beta D_\gamma D'_\delta$$

avec

- M = $(R^1)_3SiO_{1/2}$
- M'= $H_a(R^1)_b SiO_{1/2}$ , a+b=3, a=1,2 ou 3, b=0 à 3

- D = $(R^2)_2SiO_{2/2}$
- D'= $HR^3SiO_{2/2}$
- $R^1$, $R^2$, $R^3$ répondant indépendamment à la même définition que le groupe Z de la formule (I.1);

  ► possédant une viscosité v5 (en mPa.s à 25°C) définie comme suit: $5 \le v5 \le 500$, de préférence $10 \le v5 \le 200$, et mieux encore $10 \le v5 \le 100$
  ► et présentant un titre en Si-H (% en poids par rapport à ce POS B1) défini comme suit: $5 \le$ Si-H $\le 46$, de préférence $20 \le$ Si-H $\le 46$, et mieux encore $30 \le$ Si-H $\le 46$ ;

- et/ou au moins un POS (B2) ramifié de formule moyenne suivante:

$$M'_hQ_k$$

avec

- M' = $H_a(R^1)_bSiO_{1/2}$ , a+b=3, a=1,2 ou 3, b=0 à 3
- Q = $SiO_{4/2}$
- $4 \le h \le 20$ ; $1 \le k \le 4$ ou 5

  ► possédant une viscosité v5 (en mPa.s à 25°C) définie comme suit: $5 \le v5' \le 100$, de préférence $10 \le v5' \le 30$;
  ► et présentant un titre en Si-H (% en poids par rapport à ce POS B2) défini comme suit: $15 \le$ Si-H $\le 40$, de préférence $25 \le$ Si-H $\le 35$, et mieux encore $25 \le$ Si-H $\le 30$.

Selon une première variante de la forme préférée (B1), $\alpha = 2$, $\beta = 0$, $\delta + \gamma$ compris entre 10 et 200, de préférence entre 20 et 100, plus préférentiellement, entre 30 et 70 , et mieux encore $\gamma = 0$.

Selon une deuxième variante de la forme préférée de (B1):

$$0 \le \alpha \le 2$$

$$0 \le \beta \le 2$$

$$0 \le \gamma$$

$$0 < \delta$$

$0 \le \gamma/\delta$, de préférence $0 \le \gamma/\delta \le 2$; et plus préférentiellement encore

$$0 \le \gamma/\delta \le 1,5;$$

$15 \le (\beta/\delta) \times 1000 \le 150$, de préférence $15 \le (\beta/\delta) \times 1000 \le 80$; et plus préférentiellement encore $15 \le (\beta/\delta) \times 1000 \le 60$.

La formule linéaire moyenne du réticulant (B1) indiqué ci-dessus est une formule globale qui couvre :

♦ -a- les cas où le réticulant (B1) comprend les motifs M M'D D' sur une même molécule POS (de préférence linéaire), le réticulant pouvant comprendre une ou plusieurs molécules M M'D D' différentes,
♦ -b- les cas où le réticulant (B1) est formé par un mélange de molécules POS (de préférence linéaires) porteuses chacune d'une partie des motifs M M'D D',
♦ -c- les cas où le réticulant (B1) est formé par un mélange de réticulants (B1) (de préférence linéaires) de types -a- et -b-, tels que décrits ci-dessus.

A titre d'exemples de réticulant (B1) de type -b-, on peut citer les mélanges de (B1) comprenant des motifs M et D' et de POS comprenant des motifs M,D et D' ou des mélanges de (B1) comprenant des motifs M et D et de POS comprenant des motifs M',D et D', ou des mélanges de (B1) comprenant des motifs M et D' et de POS comprenant des motifs M et D, ou des mélanges de (B1) comprenant des motifs M' et D' et de POS comprenant des motifs M et D.

Les bases de compositions silicones polyaddition (A)(B) selon l'invention peuvent ne comporter que des polyorganosiloxanes (I.1) et (1.2) linéaires comme, par exemple, celles décrites dans les brevets : US-A-3 220 972, US-A-3 697 473 et US-A-4 340 709.

Les catalyseurs (C) sont également bien connus. On utilise, de préférence, les composés du platine et du rhodium. On peut, en particulier, utiliser les complexes du platine et d'un produit organique décrits dans les brevets US-A-3 159 601, US-A-3 159 602, US-A-3 220 972 et les brevets européens EP-A-0 057 459, EP-A-0 188 978 et EP-A-0 190 530, les complexes du platine et d'organosiloxanes vinylés décrits dans les brevets US-A-3 419 593, US-A-3 715 334, US-A-3 377 432 et US-A-3 814 730. Le catalyseur généralement préféré est le platine. Dans ce cas, la quantité pondérale de catalyseur (II), calculée en poids de platine-métal, est généralement comprise entre 2 et 500 ppm, de préférence entre 5 et 200 ppm basée sur le poids total de la composante silicone alcénylée (A) et de l'huile réticulant (B).

L'additif promoteur d'accrochage (D) éventuellement présent dans la composition selon l'invention, est de préférence choisi parmi les silanes époxy-fonctionnels, de préférence dans le groupe comprenant :

  ○ le (3,4-époxycyclohexyl)éthyltriéthoxy-silane [Coatosil® 1770],
  ○ le Tris(3-(triméthoxysilyl)propyl)isocyanurate [A-Link 597],
  ○ GLYMO,
  ○ MEMO,
  ○ des composés silicones comportant à la fois des groupements SiH ou SiVi et des groupements époxy fonctionnels,
  ○ et leurs mélanges.

Les concentrations adaptées en additif (D) sont, par exemple, comprises entre 0,5 et 5%, de préférence entre 1 et 3%.

Selon une disposition préférée de l'invention, la composition comprend au moins un inhibiteur de réticulation (E) choisi parmi les composés suivants :

- les polyorganosiloxanes, avantageusement cycliques et substitués par au moins un alcényle, le tétraméthylvinyltétrasiloxane étant particulièrement préféré,
- la pyridine,
- les phosphines et les phosphites organiques,
- les amides insaturés,
- les dialkyldicarboxylates (brevets US-A-4,256,870 ; 4,476,166),
- les dialkylacétylènedicarboxylates (brevet US-A-4,347,346)
- les maléates alkylés,
- les diallylmaléates,
- les alcools acétyléniques (brevets US-A-3,989,866; 4,336,364; 3,445,420),
- et leurs mélanges.

Ces alcools acétyléniques, (cf. FR-B-1 528 464 et FR-A-2 372 874), qui font partie des bloqueurs thermiques de réaction d'hydrosilylation préférés, ont pour formule :

$$R^4 - (R^5) \, C \, (OH) - C \equiv CH$$

formule dans laquelle,

  . $R^4$ est un radical alkyle linéaire ou ramifié, ou un radical phényle ;
  . $R^5$ est H ou un radical alkyle linéaire ou ramifié, ou un radical phényle ;

les radicaux $R^4$, $R^5$ et l'atome de carbone situé en a de la triple liaison pouvant éventuellement former un cycle ; le nombre total d'atomes de carbone contenu dans $R^4$ et $R^5$ étant d'au moins 5, de préférence de 9 à 20.

Lesdits alcools sont, de préférence, choisis parmi ceux présentant un point d'ébullition supérieur à 250˚C. On peut citer à titre d'exemples :

  . l'éthynyl-1-cyclohexanol 1 ;
  . le méthyl-3 dodécyne-1 ol-3 ;
  . le triméthyl-3,7,11 dodécyne-1 ol-3 ;
  . le diphényl-1,1 propyne-2 ol-1 ;
  . l'éthyl-3 éthyl-6 nonyne-1 ol-3 ;

. le méthyl-3 pentadécyne-1 ol-3.

Ces alcools α-acétyléniques sont des produits du commerce.
Un tel ralentisseur est présent en quantité telle qu'il inhibe l'action du catalyseur à température ambiante, cette action inhibitrice cessant lors du traitement de réticulation à température élevée; cette quantité est généralement de l'ordre de 3000 ppm au maximum, de préférence à raison de 100 à 2500 ppm par rapport au poids total de la composante silicone alcénylée (A) et de l'huile silicone (B), en particulier, dans le cas où l'agent inhibiteur d'hydrosilylation est l'éthynylcyclohexanol.

Selon une variante, la composition silicone réticulable anti-adhérente renferme au moins un système modulateur d'adhérence (F).
Ce système modulateur d'adhérence (F) est sélectionné parmi les systèmes connus. Il peut s'agir de ceux décrits dans le brevet français FR-B-2 450 642, le brevet US -B- 3 772 247 ou la demande de brevet européen EP-A-0 601 938. A titre d'exemples, on peut citer les modulateurs à base :

○ de 96 à 85 parties en poids d'au moins une résine polyorganosiloxane (A) réactive de type : $MD^{Vi}Q$, $MM^{Vi}Q$, $MD^{Vi}T$, $MM^{Héxényle}Q$, ou $MM^{Allyloxypropyle}Q$,
○ de 4 à 15 parties en poids d'au moins une résine (B) non réactive de type: MD'Q, MDD'Q, MDT', MQ, ou MDQ.

Suivant une caractéristique préférée de l'invention, la concentration en [POS (B)], en % en poids sur sec par rapport à la masse totale de la composition , est définie comme suit:

❖ (F)] ≤ 20
❖ de préférence (F)] ≤ 15
❖ et plus préférentiellement encore (F)] ≤ 10.

Il a pu en effet être observé, dans le cadre de l'invention, que l'on optimise les performances du système modulateur, pour autant que l'on prenne soin de l'introduire dans la composition silicone anti-adhérente, en quantité telle que F ne représente pas plus de 20 % en poids sur sec, par rapport à la masse totale de la composition.

Le diluant (G) éventuellement présent dans la composition est avantageusement choisi parmi les alpha oléfines notamment celles comportant de 4 à 15 atomes de carbone par molécule.

D'autres additifs fonctionnels (H) peuvent être incorporés dans la composition. Ces additifs peuvent être choisis parmi les charges telles que par exemple des microbilles de verre, des agents anti-"misting"...

Avantageusement, les compositions durcissables complètes ABC(D)(E)(G)(H) - les composants (-) étant facultatifs - sont fluides à température normale; leur viscosité peut être, par exemple, une viscosité v6 (en mPa.s à 25˚C) définie comme suit:

100 ≤ v6 ≤ 3.000, de préférence 200 ≤ v6 ≤ 2.000, et mieux encore 500 ≤ v6 ≤ 1.000.

La préparation de la composition silicone selon l'invention, utilisable notamment comme base d'enduction pour la réalisation de revêtements anti-adhérents et hydrofuges, cette composition étant du type de celle définie ci-dessus, consiste simplement à mélanger les constituants ABC(D)(E)(F)(G)(H) à l'aide de moyens et de méthodologies de mélange connus de l'homme de l'art.

Les compositions selon l'invention peuvent être déposées sur des supports souples de préférence formés par des films de matière plastique polymère sélectionnés parmi les polyoléfines (e.g. polyéthylène, polypropylène...) et/ou parmi les polyesters (e.g. PET ...) ces derniers étant plus particulièrement visés. Cela n'exclut pas pour autant d'autres supports souples tels que des papiers de types divers (supercalendré, couché...), des cartons, des feuilles de cellulose, des feuilles en métal...

Les supports souples en polyester par exemple du genre PET revêtus d'une couche anti-adhérente en silicone, sont utilisés comme "liners" pour des étiquettes adhésives.

Selon un autre de ses aspects, l'invention concerne un procédé de réalisation d'un revêtement, hydrofuge et anti-adhérent sur un support, de préférence un film polymère, plus préférentiellement un film polymère en polyester, **caractérisée en ce qu**'il consiste à appliquer sur ce support au moins une couche d'une composition silicone telle que définie ci-dessus, et à faire en sorte que cette couche réticule, de préférence en l'activant par chauffage.

Ces compositions peuvent être appliquées à l'aide de dispositifs utilisés sur les machines industrielles d'enduction du papier tels qu'une tête d'enduction à cinq rouleaux, des systèmes à lames d'air ou à barre égalisatrice, sur des supports ou matériaux souples, puis durcies par circulation dans des fours-tunnels chauffés à 70-200˚C; le temps de passage dans ces fours est fonction de la température ; celui-ci est généralement de l'ordre de 5 à 15 secondes à une température de l'ordre de 100˚C et de l'ordre de 1,5 à 3 secondes à une température de l'ordre de 180˚C.

Les quantités de compositions déposées sont par exemple de l'ordre de 0,5 à 2 g par m$^2$ de surface à traiter, ce qui correspond au dépôt de couches de l'ordre de 0,5 à 2 $\mu$m.

Les matériaux ou supports ainsi enduits peuvent ultérieurement être mis en contact avec des matières adhésives quelconques caoutchoucs, acryliques ou autres, sensibles à la pression. La matière adhésive est alors aisément détachable dudit support ou matériau.

Selon l'invention, pour la réticulation du revêtement, le support enduit avec la composition silicone polyaddition est placé à une température de préférence inférieure ou égale à 180°C pendant moins de 10 secondes.

Dans un autre de ses objets, l'invention vise également un procédé pour augmenter l'accrochage (i.e résistance à l'abrasion) d'un revêtement silicone réticulé/durci, hydrofuge et anti-adhérent, appliqué sur un support, de préférence un film polymère, plus préférentiellement un film polymère en polyester, et obtenu à partir d'une composition silicone susceptible de réticuler/durcir par polyaddition et comprenant :

* (A) une composante silicone alcénylée contenant au moins une huile silicone fonctionnelle comprenant au moins un PolyOrganoSiloxane (POS) comprenant des motifs de formule :

$$W_a Z_b SiO_{\frac{4-(a+b)}{2}} \qquad (I.1)$$

dans laquelle :

- W représente indépendamment un groupe fonctionnel alcényle, de préférence en C2-C6, et, plus préférentiellement encore vinyle ou allyle,
- Z représente indépendamment un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3;

* (B) au moins une huile silicone réticulante comprenant au moins un POS hydrogéné présentant, par molécule, au moins trois atomes d'hydrogène liés au silicium;
* (C) au moins un catalyseur composé d'au moins un métal appartenant au groupe du platine;
* (D) éventuellement au moins un additif promoteur d'accrochage;
* (E) éventuellement au moins un inhibiteur de réticulation;
* (F) éventuellement, un système modulateur d'adhérence;
* (G) éventuellement, au moins un diluant;
* (H) éventuellement, au moins un autre additif fonctionnel, notamment anti-misting;
* et leurs mélanges;

**caractérisé en ce qu'**il consiste à utiliser une composition silicone dont la composante silicone alcénylée A comprend une fraction F1 et une fraction F2, différentes l'une de l'autre,

. la fraction F1 comprenant au moins une huile silicone alcénylée choisie dans le groupe comprenant au moins un POS linéaire présentant, par molécule, au moins deux groupes alcényle (de préférence en $C_2$-$C_6$ ) lié au silicium,

- de formule linéaire moyenne : $M^w_r(D)_q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25°C) définie comme suit:

75 ≤ v4 ≤ 4.000, de préférence 100 ≤ v4 ≤ 2.000, et mieux encore 100 ≤ v4 ≤ 1.000

- et de rapport massique $R^w$ (% en poids) des motifs Si-alcényle sur la masse totale du POS de la fraction F1 de A est défini comme suit:

0,1 ≤ $R^w$ ≤ 3,5, de préférence 0,2 ≤ $R^w$ ≤ 3, et mieux encore 0,5 ≤ $R^w$ ≤ 3,

.F2 ayant une activité de promotion de l'adhérence sur les supports (donc de la résistance à l'abrasion) des revêtements anti-adhérence obtenus par durcissement/réticulation de la composition,
. et F2 étant formée par au moins une huile silicone alcénylée choisie dans le groupe comprenant:

→ ($A_{2.1}$) les huiles silicone monoalcénylées comprenant chacune au moins un POS linéaire présentant, par molécule, une seule extrémité porteuse d'un seul groupe alcényle (de préférence en $C_2$-$C_6$ ) lié au silicium, et de formule linéaire moyenne $M^wD_mM$ dans laquelle M, $M^w$ et D sont des motifs siloxy de formule (I.1) avec pour M : a=0, b=3 ; $M^w$ : a=1, b=2 et pour D: a=0, b=2; et m est un entier naturel supérieur ou égal à 150;

→ ($A_{2.2}$) les huiles silicone longues comprenant chacune au moins un POS linéaire présentant, par molécule, à chacune de ses extrémités un groupe alcényle (de préférence en $C_2$-$C_6$ ) lié au silicium et de formule linéaire moyenne $M^wD_nM^w$ dans laquelle $M^w$ et D sont des motif siloxy de formule (I.1) avec pour $M^w$ : a=1, b=2 et pour D: a=0, b=2; et n est un entier naturel supérieur ou égal à 250 ; la viscosité v2 desdites huiles $A_{2.2}$ étant comprise entre 3000 et 200000 mPa.s;

→ ($A_{2.3}$) les huiles silicone "faiblement" alcénylées comprenant chacune au moins un POS linéaire présentant, par molécule, au moins un groupe alcényle (de préférence en $C_2$-$C_6$ ) lié au silicium, de formule linéaire moyenne $(M^w)_x(M)_y(D)_p(D^w)_{p'}$ dans laquelle M, $M^w$ et D sont des motifs siloxy de formule (I.1) avec pour M : a=0, b=3, $M^w$ : a=1, b=2 et pour D: a=0, b=2, $D^w$: a=1, b=1; p, p' sont des entiers naturels; x,y=0,1 ou 2, x+y=2, le rapport massique $R^w$ (% en poids) des motifs alcényle sur la masse totale du POS $A_{2.3}$ est inférieur ou égal à 0,5, de préférence à 0,3 et mieux encore à 0,2;

→ et leurs mélanges.

Enfin, l'invention concerne un support, de préférence un film polymère, plus préférentiellement un film polymère en polyester **caractérisé en ce qu**'il comporte au moins un revêtement, hydrofuge et anti-adhérent à base d'une composition silicone réticulé/durci par polyaddition et comprenant:

* (A) une composante silicone alcénylée contenant au moins une huile silicone fonctionnelle comprenant au moins un PolyOrganoSiloxane (POS) comprenant des motifs de formule :

$$W_aZ_bSiO_{\frac{4-(a+b)}{2}} \qquad (I.1)$$

dans laquelle :

- W représente indépendamment un groupe fonctionnel alcényle, de préférence en C2-C6, et, plus préférentiellement encore vinyle ou allyle,
- Z représente indépendamment un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3;

cette composante silicone alcénylée A comprenant une fraction F1 et une fraction F2, différente l'une de l'autre,

. la fraction F1 comprenant au moins une huile silicone alcénylée choisie dans le groupe comprenant au moins un POS linéaire présentant, par molécule, au moins deux groupes alcényle (de préférence en $C_2$-$C_6$ ) lié au silicium,

- de formule linéaire moyenne : $M^w_r(D)_q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25°C) définie comme suit:

.75 ≤ v4 ≤ 4.000, de préférence 100 ≤ v4 ≤ 2.000, et mieux encore 100 ≤ v4 ≤ 1.000

- et de rapport massique $R^w$ (% en poids) des motifs Si-alcényle sur la masse totale du POS de la fraction F1 de A est défini comme suit: 0,1 ≤ $R^w$ ≤ 3,5, de préférence 0,2 ≤ $R^w$ ≤ 3, et mieux encore 0,5 ≤ $R^w$ ≤ 3,

.F2 ayant une activité de promotion de l'adhérence sur les supports (donc de la résistance à l'abrasion) des revêtements anti-adhérence obtenus par durcissement/réticulation de la composition,

. et F2 étant formée par au moins une huile silicone alcénylée choisie dans le groupe comprenant:

$\rightarrow$ (A$_{2.1}$) les huiles silicone monoalcénylées comprenant chacune au moins un POS linéaire présentant, par molécule, une seule extrémité porteuse d'un seul groupe alcényle (de préférence en C$_2$-C$_6$ ) lié au silicium, et de formule linéaire moyenne M$^w$D$_m$M dans laquelle M, M$^w$ et D sont des motifs siloxy de formule (I.1) avec pour M : a=0, b=3 ; M$^w$ : a=1, b=2 et pour D: a=0, b=2; et m est un entier naturel supérieur ou égal à 150;

$\rightarrow$ (A$_{2.2}$) les huiles silicone longues comprenant chacune au moins un POS linéaire présentant, par molécule, à chacune de ses extrémités un groupe alcényle (de préférence en C$_2$-C$_6$ ) lié au silicium et de formule linéaire moyenne M$^w$D$_n$M$^w$ dans laquelle M$^w$ et D sont des motif siloxy de formule (1.1) avec pour M$^w$ : a=1, b=2 et pour D: a=0, b=2; et n est un entier naturel supérieur ou égal à 250 ; la viscosité v2 desdites huiles A$_{2.2}$ étant comprise entre 3000 et 200000 mPa.s;

$\rightarrow$ (A$_{2.3}$) les huiles silicone "faiblement" alcénylées comprenant chacune au moins un POS linéaire présentant, par molécule, au moins un groupe alcényle (de préférence en C$_2$-C$_6$ ) lié au silicium, de formule linéaire moyenne

(M$^w$ )$_x$(M)$_y$(D)$_p$(D$^w$)$_{p'}$ dans laquelle M, M$^w$ et D sont des motifs siloxy de formule (I.1) avec pour M : <u>a=0; b=3</u>, M$^w$ : a=1, b=2 et pour D: a=0, b=2, D$^w$: a=1, b=1; p, p' sont des entiers naturels; x,y=0,1 ou 2, x+y=2, le rapport massique R$^w$ (% en poids) des motifs alcényle sur la masse totale du POS A$_{2.3}$ est inférieur ou égal à 0,5, de préférence à 0,3 et mieux encore à 0,2;

$\rightarrow$ et leurs mélanges;

\* (B) au moins une huile silicone réticulante comprenant au moins un POS hydrogéné présentant, par molécule, au moins trois atomes d'hydrogène liés au silicium;

\* (C) au moins un catalyseur composé d'au moins un métal appartenant au groupe du platine;

\* (D) éventuellement au moins un additif promoteur d'accrochage;

\* (E) éventuellement au moins un inhibiteur de réticulation;

\* (F) éventuellement, un système modulateur d'adhérence;

\* (G) éventuellement, au moins un diluant;

\* (H) éventuellement, au moins un autre additif fonctionnel, notamment anti-misting.

Les constituants ABC(D)(E)(F)(G)(H) sont tels que décrits ci-dessus.

Les revêtements silicone anti-adhérents selon l'invention sont bien et durablement accrochés sur les supports souples notamment en PET, même dans des conditions drastiques d'humidité et de température. Ils sont réticulés/ durcis (peu d'extractibles). Ils ont un profil de force de décollement tel que la force de pelage reste élevée même à grande vitesse (bonne anti-adhérence). Ils sont lisses et transparents, ce qui finit de faire d'eux des supports d'étiquettes performants.

Les exemples suivants sont donnés à titre indicatif et ne peuvent être considérés comme une limite du domaine et de l'esprit de l'invention.

**EXEMPLES :**

L'enduction de silicone est réalisée sur machine d'enduction pilote Rotomec à 100 m/min (3.6 s de temps de séjour dans les fours à 180˚C) sur un support film polyester de 36 microns d'épaisseur (Luminor 6001) commercialisé par la société Toray.

La température de la couche silicone est contrôlée en ligne à 140˚C environ à l'aide d'une caméra Infra Rouge.

On caractérise le revêtement après enduction et réticulation par les tests suivants :

- Poids du revêtement silicone : On excite à l'aide d'une source radioactive ou un tube de fluo X les atomes de silicium du revêtement et on mesure l'intensité X réémise par le revêtement. Moyennant un étalonnage on détermine ainsi le poids du revêtement silicone. L'appareillage utilisé a pour référence Lab X1000 commercialisé par la société Oxford.

- Taux d'extractibles (en sortie de machine d'enduction : "in-line" / 4 jours après la réticulation : "off-line") : le test consiste à immerger le revêtement dans de la méthylisobutylcétone puis à doser par spectrophotométrie d'absorption atomique Perkin Elmer 3100; sur un revêtement en sortie de la machine d'enduction ("in line").

Moyennant un étalonnage, on accède au taux de silicone extractible du revêtement.

- Accrochage au support : test de "rub off". Dans la pratique on frotte avec le doigt sur la surface du revêtement et on note le nombre de passage à partir duquel le revêtement se dégrade/décolle. Une note de 10 (10 passages) est considérée comme acceptable pour l'application.

- Force de décollement (pelage): le test utilisé correspond aux normes Finat n°3 et 10 de l'édition n°5 de 1999. Ce test est réalisé 4 jours après la réticulation ("off-line") avec des rubans adhésifs commercialisés sous la marque Tesa® 7475 à 23°C (base acrylique), Tesa® 7476 à 70°C (base caoutchouc).

Produits utilisés :

Abréviations :

$M = (CH_3)_3SiO_{1/2}$
$M^* = (CH_3)_2 (Vi)SiO_{1/2}$
$D = (CH_3)_2SiO_{2/2}$
$D^* = (CH_3)(Vi)SiO_{2/2}$
$Vi = vinyle$

- FRACTION F1 : Pol 1 = polymère siloxanique de structure $M_2D_nD^*_m$ de viscosité 500mPa.s titrant 0,9% Vi en poids
- FRACTION F2 A2.1 : Pol 2 = polymère siloxanique de structure $M^*_2D_n$ de viscosité 10 Pa.s
- FRACTION F2 A2.2 : Pol 3 = polymère siloxanique de structure $MM^*D_n$ de viscosité 900 mPa.s titrant 0,08% Vi en poids
- FRACTION F2 A2.2 : Pol 4 = polymère siloxanique de structure $MM^*D_n$ de viscosité 30 Pa.s titrant 0,025% Vi en poids
- FRACTION F2 A2.3 : Pol 5 = polymère siloxanique de structure $M_2D_nD^*_m$ de viscosité 2900mPa.s titrant 0,25% Vi en poids
- HUILE SILICONE NON ALCENYLEE : Pol 6 = polymère siloxanique de structure $M_2D_n$ de viscosité 350 mPa.s
- HUILE SILICONE RETICULANT XL = polymère siloxanique de structure $M_2D'_n$ titrant 46% SiH en poids
- Add D= époxycyclohexyl-éthyl triéthoxysilane
- Inhibiteur de Réticulation E = éthynylcyclohexanol
- Cat C = catalyseur de Karstedt titrant 10% de platine en poids

**Exemples 1 à 14**

**-A- Compositions**

**TABLEAU 1**

| Exemple | Pol 1 | Pol 2 | Pol 3 | Pol 4 | Pol 5 | Pol 6 | XL | Add | Ret | Cat |
|---------|-------|-------|-------|-------|-------|-------|-----|-----|-----|--------|
| | p | p | p | p | p | p | p | p | p | ppm Pt |
| comp1 | 100 | | | | | | 7 | | 0,15 | 120 |
| comp2 | 100 | | | | | | 13 | | 0,15 | 120 |
| | | | | | | | | | | |
| | | | | | | | | | | |
| 3 | 50 | 50 | | | | | 4 | | 0,15 | 120 |
| 4 | 50 | 50 | | | | | 8 | | 0,15 | 120 |
| 5 | 75 | 25 | | | | | 10 | | 0,15 | 120 |
| | | | | | | | | | | |
| | | | | | | | | | | |
| comp6 | | | 100 | | | | 1,5 | | 0,15 | 120 |

(suite)

| Exemple | Pol 1 | Pol 2 | Pol 3 | Pol 4 | Pol 5 | Pol 6 | XL | Add | Ret | Cat |
|---------|-------|-------|-------|-------|-------|-------|----|-----|-----|-----|
| | p | p | p | p | p | p | p | p | p | ppm Pt |
| comp7 | 50 | | 50 | | | | 5 | | 0,15 | 120 |
| comp8 | 75 | | 25 | | | | 6 | | 0,15 | 120 |
| | | | | | | | | | | |
| 9 | 75 | | | 25 | | | 6 | | 0,15 | 120 |
| | | | | | | | | | | |
| | | | | | | | | | | |
| comp10 | | | | | 100 | | 7 | | 0,15 | 120 |
| 11 | 50 | | | | 50 | | 4 | | 0,15 | 120 |
| | | | | | | | | | | |
| comp12 | 100 | | | | | 3 | 7 | | 0,15 | 120 |
| | | | | | | | | | | |
| 13 | 50 | 50 | | | | | 8 | 2 | 0,15 | 120 |
| 14 | 75 | 25 | | | | | 10 | 2 | 0,15 | 120 |
| 1comp, 2comp et 12comp sont des exemples de compositions comparatives qui ne comportent pas de fraction F2 incluant un ou plusieurs polymères promoteurs de l'accrochage. | | | | | | | | | | |

**-B- Les tests et leurs résultats :**

**TABLEAU 2**

| Exemple | % extr. | | rub-off après stockage du liner +adhésif à 50°C RH70 3 jours | 5 jours | 7 jours | 10 jours | 14 jours | 22 jours | 34 jours | | Pelage N/m (g/inch) |
|---------|---------|---|---------|---------|---------|----------|----------|----------|----------|---|-------|
| comp1 | | | >10 | 2 | | | | | | | 29(75) |
| Comp2 | | | >10 | 5 | | | | | | | 66(170) |
| | | | | | | | | | | | |
| 3 | 2,1 | | >10 | >10 | 5 | | | | | | 18(46) |
| 4 | 2,1 | | >10 | >10 | >10 | 2 | | | | | 58(150) |
| 5 | 2,5 | | >10 | >10 | 4 | | | | | | 39(100) |
| | | | | | | | | | | | |
| comp6 | 9,6 | | >10 | >10 | >10 | >10 | >10 | >10 | >10 | | 97(250) |
| comp7 | 5,1 | | >10 | >10 | 4 | | | | | | 33(85) |
| comp8 | 4,7 | | >10 | 3 | | | | | | | 27(70) |
| | | | | | | | | | | | |

(suite)

| Exemple | | % extr. | | rub-off après stockage du liner +adhésif à 50˚C RH70 | | | | | | | | Pelage N/m (g/inch) |
|---|---|---|---|---|---|---|---|---|---|---|---|---|
| | | | | 3 jours | 5 jours | 7 jours | 10 jours | 14 jours | 22 jours | 34 jours | | |
| 9 | | 3,6 | | >10 | >10 | >10 | **5** | | | | | 26(68) |
| | | | | | | | | | | | | |
| comp10 | | 7 | | >10 | >10 | >10 | >10 | 8 | | | | 44(115) |
| 11 | | 4,7 | | >10 | 3 | | | | | | | 33(85) |
| | | | | | | | | | | | | |
| comp12 | | 8,9 | | | | **1** | | | | | | |
| | | | | | | | | | | | | |
| 13 | | 2,8 | | >10 | >10 | >10 | >10 | >10 | >10 | 8 | | |
| 14 | | 2,5 | | >10 | >10 | >10 | >10 | >10 | >10 | 7 | | |

**Commentaires:**

Comp 1 et Comp2: exemples avec une composante silicone A alcénylée uniquement constituée par la fraction F1. On observe qu'un gain insignifiant sur l'accrochage "Rubb-off" (RO) apportée par un excès de réticulant B dans l'exemple comp2.

Exemples 3-4-5: fraction F1 et huile longue A2.1.

Amélioration du RO, surtout lorsque le taux de de réticulant B est élevé.

Exemples Comp6-7-8:

Ex.comp6 : huile monoalcénylée A2.2.
Ex.comp7: fraction F1 et huile monoalcénylée en bout de chaîne A2.2.
Ex.comp8 fraction F1 et moindre quantité d'huile monoalcénylée en bout de chaîne $A_{2.2}$.
Plus la concentration en A2.2 est élevée, meilleur est le RO.

Exemple 9: fraction F1 et huile monoalcénylée A2.2 plus visqueuse que dans les exemples 6,7 et 8.

Bonne performance en RO, même à faible teneur.

Exemples comp10 et 11:

Ex. comp10 : huile "faiblement" alcénylée A2.3
Ex.11 : fraction F1 et huile "faiblement" alcénylée A2.3
Plus la concentration en A2.3 est élevée, meilleur est le RO.

Comp12:

Contre-exemple avec huile non alcénylée : aucun effet.

Exemples 13 et 14:

Ex.13 : fraction F1, huile longue A2.1 et additif promoteur d'adhérence (D).

Ex.14 : fraction F1, huile longue A2.1 et additif promoteur d'adhérence (D).

Bonne performance en RO, même à faible taux d'huile longue A2.1.

**Revendications**

**1.** Composition silicone susceptible de réticuler/durcir par polyaddition, pour former un revêtement, hydrofuge et anti-adhérent pour supports de préférence sous forme de films polymère, **caractérisée en ce qu'**elle comprend :

* (A) une composante silicone alcénylée contenant au moins une huile silicone fonctionnelle comprenant au moins un PolyOrganoSiloxane (POS) comprenant des motifs de formule :

$$W_a Z_b SiO_{\frac{4-(a+b)}{2}} \quad (I.1)$$

dans laquelle :

- W représente indépendamment un groupe fonctionnel alcényle, de préférence en C2-C6, et, plus préférentiellement encore vinyle ou allyle,
- Z représente indépendamment un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3;

cette composante silicone alcénylée A comprenant une fraction F1 et une fraction F2, différente l'une de l'autre,

. la fraction F1 comprenant au moins une huile silicone alcénylée choisie dans le groupe comprenant au moins un POS linéaire présentant, par molécule, au moins deux groupes alcényle (de préférence en $C_2$-$C_6$ ) lié au silicium,

- de formule linéaire moyenne : $M^w_r(D)q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25˚C) définie comme suit:
$75 \leq v4 \leq 4.000$, de préférence $100 \leq v4 \leq 2.000$, et mieux encore $100 \leq v4 \leq 1.000$
- et de rapport massique $R^w$ (% en poids) des motifs Si-alcényle sur la masse totale du POS de la fraction F1 de A est défini comme suit:
$0,1 \leq R^w \leq 3,5$, de préférence $0,2 \leq R^w \leq 3$, et mieux encore $0,5 \leq R^w \leq 3$,

. F2 ayant une activité de promotion de l'adhérence sur les supports (donc de la résistance à l'abrasion) des revêtements anti-adhérence obtenus par durcissement/réticulation de la composition,
.et F2 étant formée par au moins une huile silicone alcénylée choisie dans le groupe comprenant:

→ ($A_{2.1}$) les huiles silicone monoalcénylées comprenant chacune au moins un POS linéaire présentant, par molécule, une seule extrémité porteuse d'un seul groupe alcényle (de préférence en $C_2$-$C_6$ ) lié au silicium, et de formule linéaire moyenne $M^w D_m M$ dans laquelle M, $M^w$ et D sont des motifs siloxy de formule (I.1) avec pour M : a=0, b=3 ; $M^w$ : a=1, b=2 et pour D: a=0, b=2; et m est un entier naturel supérieur ou égal à 150;
→ ($A_{2.2}$) les huiles silicone longues comprenant chacune au moins un POS linéaire présentant, par molécule, à chacune de ses extrémités un groupe alcényle (de préférence en $C_2$-$C_6$ ) lié au silicium et de formule linéaire moyenne $M^w D_n M^w$ dans laquelle $M^w$ et D sont des motif siloxy de formule (I.1) avec pour $M^w$ : a=1, b=2 et pour D: a=0, b=2; et n est un entier naturel supérieur ou égal à 250 ; la viscosité v2 desdites huiles $A_{2.2}$ étant comprise entre 3000 et 180000 mPa.s;

$\rightarrow$ ($A_{2.3}$) les huiles silicone "faiblement" alcénylées comprenant chacune au moins un POS linéaire présentant, par molécule, au moins un groupe alcényle (de préférence en $C_2$-$C_6$ ) lié au silicium, de formule linéaire moyenne

$(M^w)_x(M)_y(D)_p(D^w)_{p'}$ dans laquelle M, $M^w$ et D sont des motifs siloxy de formule (I.1) avec pour M : 0' b=3, $M^w$ : a=1, b=2 et pour D: a=0, b=2, $D^w$: a=1, b=1; p, p' sont des entiers naturels; x,y=0, ou 2, x+y=2, le rapport massique $R^w$ (% en poids) des motifs alcényle sur la masse totale du POS $A_{2.3}$ est inférieur ou égal à 0,5, de préférence à 0,3 et mieux encore à 0,2;

$\rightarrow$ et leurs mélanges;

* (B) au moins une huile silicone réticulante comprenant au moins un POS hydrogéné présentant, par molécule, au moins trois atomes d'hydrogène liés au silicium;
* (C) au moins un catalyseur composé d'au moins un métal appartenant au groupe du platine;
* (D) éventuellement au moins un additif promoteur d'accrochage;
* (E) éventuellement au moins un inhibiteur de réticulation;
* (F) éventuellement, un système modulateur d'adhérence;
* (G) éventuellement, au moins un diluant;
* (H) éventuellement, au moins un autre additif fonctionnel, notamment anti-misting.

2. Composition selon la revendication 1, **caractérisée en ce que** la fraction F1 de la composante silicone alcénylée A représente au moins 30% en poids de A, de préférence au moins 50%.

3. Composition selon la revendication 1, **caractérisée en ce que** les huiles $A_{2.1}$ $A_{2.2}$ $A_{2.3}$ sont choisies de telle sorte que dans leurs formules simplifiées: m/2, n et p/p' sont respectivement supérieur ou égal à 70 , de préférence supérieur ou égal à 100.

4. Composition selon la revendication 1, **caractérisée en ce que** la viscosité, respectivement v1, v2, v3, des huiles $A_{2.1}$ $A_{2.2}$ $A_{2.3}$ (en mPa.s à 25˚C) est définie comme suit:

$\rightarrow$ 400 $\leq$ v1$\leq$ 60000, de préférence 500 $\leq$ v1 $\leq$ 50.000, et mieux encore 800 $\leq$ v1 $\leq$ 30000;
$\rightarrow$ 3000 $\leq$ v2 $\leq$ 180000, de préférence 5000 $\leq$ v2 $\leq$ 100000, et mieux encore 5000 $\leq$ v2 $\leq$ 3000;
$\rightarrow$ 800 $\leq$ v3 $\leq$ 15000, de préférence 1000 $\leq$ v3 $\leq$ 10000, et mieux encore 1000 $\leq$ v3 $\leq$ 5000.

5. Composition selon la revendication 1, **caractérisée par** un ratio molaire Si-H / Si-alcényle, tel que :

$$1{,}0 \leq \text{Si-H/Si-alcényle} \leq 7$$

de préférence

$$1{,}5 \leq \text{Si-H/Si-alcényle} \leq 5.$$

6. Composition selon la revendication 1, **caractérisée en ce que** le rapport massique $R^w$ (% en poids) des motifs Si-alcényle sur la masse totale de F2 est défini comme suit:

$\rightarrow$ pour $A_{2.1}$

$$0{,}05 \leq R^w \leq 0{,}2; \text{ de préférence } 0{,}07 \leq R^w \leq 0{,}15;$$

$\rightarrow$ pour $A_{2.2}$

$$0{,}05 \leq R^w \leq 0{,}25; \text{ de préférence } 0{,}1 \leq R^w \leq 0{,}2.$$

7. Composition selon la revendication 1, **caractérisée en ce que** l'huile silicone réticulante B comprend :

   - au moins un POS (B1) de formule linéaire moyenne suivante:

   $$M_\alpha \, M'_\beta \, D_\gamma \, D'_\delta$$

   avec

   - $M = (R^1)_3 SiO_{1/2}$
   - $M' = H_a(R^1)_b SiO_{1/2}$, a+b=3, a=1,2 ou 3, b=0 à 3
   - $D = (R^2)_2 SiO_{2/2}$
   - $D' = HR^3 SiO_{2/2}$
   - $R^1$, $R^2$, $R^3$ répondant indépendamment a la même définition que le groupe Z de la formule (I.1) ;
   - $\alpha = 2$, $\beta = 0$, $\delta + \gamma$ compris entre 10 et 200, de préférence entre 20 et 100, plus préférentiellement, entre 30 et 70, et mieux encore $\gamma = 0$ ;
   ou
   - $0 \leq \alpha \leq 2, 0 \leq \beta \leq 2, 0 \leq \gamma, 0 \leq \delta$
   $0 \leq \gamma/\delta$, de préférence $0 \leq \gamma/\delta \leq 2$, et plus préférentiellement encore $0 \leq \gamma/\delta \leq 1,5$;
   $15 \leq (\beta/\delta) \times 1000 \leq 150$, de préférence $15 \leq (\beta/\delta) \times 1000 \leq 80$; et plus préférentiellement encore $15 \leq (\beta/\delta) \times 1000 \leq 60$

   ► possédant une viscosité v5 (en mPa.s à 25°C) définie comme suit: $5 \leq v5 \leq 500$, de préférence $10 \leq v5 \leq 200$, et mieux encore $10 \leq v5 \leq 100$
   ► et présentant un titre en Si-H (% en poids par rapport à ce POS B1) est défini comme suit: $5 \leq Si\text{-}H \leq 46$, de préférence $20 \leq Si\text{-}H \leq 46$, et mieux encore $30 \leq Si\text{-}H \leq 46$ ;

   - et/ou au moins un POS (B2) ramifié de formule moyenne suivante:

   $$M'_h Q_k$$

   avec

   - $M' = H_a(R^1)_b SiO_{1/2}$, a+b=3, a=1,2 ou 3, b=0 à 3
   - $Q = SiO_{4/2}$
   - $4 \leq h \leq 20 \quad 1 \leq k \leq 4$ ou 5

   ► possédant une viscosité v5 (en mPa.s à 25°C) définie comme suit:
   $5 \leq v5' \leq 100$, de préférence $10 \leq v5' \leq 30$;
   ► et présentant un titre en Si-H (% en poids par rapport à ce POS B2) est défini comme suit:
   $15 \leq Si\text{-}H \leq 40$, de préférence $25 \leq Si\text{-}H \leq 35$, et mieux encore
   $25 \leq Si\text{-}H \leq 30$.

8. Composition selon l'une quelconque des revendications précédentes, **caractérisée par** une viscosité v6 (en mPa.s à 25°C) définie comme suit:
   $100 \leq v6 \leq 3.000$, de préférence $200 \leq v6 \leq 2.000$, et mieux encore $500 \leq v6 \leq 1.000$.

9. Composition selon l'une quelconque des revendications précédentes, **caractérisée en ce qu'**elle comprend au moins un additif promoteur d'accrochage (D) choisi parmi les silanes époxy fonctionnels, de préférence dans le groupe comprenant :

   ○ le (3,4-époxycyclohexyl)éthyltriéthoxy-silane [Coatosil® 1770],
   ○ le Tris(3-(triméthoxysilyl)propyl)isocyanurate [A-Link 597],
   ○ GLYMO,
   ○ MEMO,
   ○ des composés silicones comportant à la fois des groupements SiH ou SiVi et des groupements époxy fonctionnels
   ○ et leurs mélanges.

**10.** Procédé de réalisation d'un revêtement, hydrofuge et anti-adhérent sur un support, de préférence un film polymère, plus préférentiellement un film polymère en polyester, **caractérisée en ce qu'**il consiste à appliquer sur ce support au moins une couche d'une composition silicone selon l'une quelconque des revendications précédentes, et à faire en sorte que cette couche réticule, de préférence en l'activant par chauffage.

**11.** Procédé pour augmenter l'accrochage (i.e résistance à l'abrasion) d'un revêtement silicone réticulé/durci, hydrofuge et anti-adhérent, appliqué sur un support, de préférence un film polymère, plus préférentiellement un film polymère en polyester, et obtenu à partir d'une composition silicone susceptible de réticuler/durcir par polyaddition et comprenant :

* (A) une composante silicone alcénylée contenant au moins une huile silicone fonctionnelle comprenant au moins un PolyOrganoSiloxane (POS) comprenant des motifs de formule :

$$W_a Z_b SiO_{\frac{4-(a+b)}{2}} \qquad (I.1)$$

dans laquelle :

- W représente indépendamment un groupe fonctionnel alcényle, de préférence en C2-C6, et, plus préférentiellement encore vinyle ou allyle,
- Z représente indépendamment un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3;

* (B) au moins une huile silicone réticulante comprenant au moins un POS hydrogéné présentant, par molécule, au moins trois atomes d'hydrogène liés au silicium;
* (C) au moins un catalyseur composé d'au moins un métal appartenant au groupe du platine;
* (D) éventuellement au moins un additif promoteur d'accrochage;
* (E) éventuellement au moins un inhibiteur de réticulation;
* (F) éventuellement, un système modulateur d'adhérence;
* (G) éventuellement, au moins un diluant;
* (H) éventuellement, au moins un autre additif fonctionnel, notamment anti-misting;
* et leurs mélanges;

**caractérisé en ce qu'**il consiste à utiliser une composition silicone dont la composante silicone alcénylée A comprend une fraction F1 et une fraction F2, différentes l'une de l'autre,

.la fraction F1 comprenant au moins une huile silicone alcénylée choisie dans le groupe comprenant au moins un POS linéaire présentant, par molécule, au moins deux groupes alcényle (de préférence en $C_2\text{-}C_6$ ) lié au silicium,

- de formule linéaire moyenne : $M^w_r(D)_q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25°C) définie comme suit:
75 ≤ v4 ≤ 4.000, de préférence 100 ≤ v4 ≤ 2.000, et mieux encore 100 ≤ v4 ≤ 1.000
- et de rapport massique $R^w$ (% en poids) des motifs Si-alcényle sur la masse totale du POS de la fraction F1 de A est défini comme suit:
0,1 ≤ $R^w$ ≤ 3,5, de préférence 0,2 ≤ $R^w$ ≤ 3, et mieux encore 0,5 ≤ $R^w$ ≤ 3,. F2 ayant une activité de promotion de l'adhérence sur les supports (donc de la résistance à l'abrasion) des revêtements anti-adhérence obtenus par durcissement/réticulation de la composition,

. et F2 étant formée par au moins une huile silicone alcénylée choisie dans le groupe comprenant:

→ ($A_{2.1}$) les huiles silicone monoalcénylées comprenant chacune au moins un POS linéaire présentant, par molécule, une seule extrémité porteuse d'un seul groupe alcényle (de préférence en $C_2$-$C_6$ ) lié au silicium, et de formule linéaire moyenne $M^wD_mM$ dans laquelle M, $M^w$ et D sont des motifs siloxy de formule (I.1) avec pour M : a=0, b=3 ; $M^w$ : a=1, b=2 et pour D: a=0, b=2; et m est un entier naturel supérieur ou égal à 150;

→ ($A_{2.2}$) les huiles silicone longues comprenant chacune au moins un POS linéaire présentant, par molécule, à chacune de ses extrémités un groupe alcényle (de préférence en $C_2$-$C_6$ ) lié au silicium et de formule linéaire moyenne $M^wD_nM^w$ dans laquelle $M^w$ et D sont des motif siloxy de formule (I.1) avec pour $M^w$ : a=1, b=2 et pour D: a=0, b=2; et n est un entier naturel supérieur ou égal à 250 ; la viscosité v2 desdites huiles $A_2$.2 étant comprise entre 3000 et 200000 mPa.s;

→ ($A_{2.3}$) les huiles silicone "faiblement" alcénylées comprenant chacune au moins un POS linéaire présentant, par molécule, au moins un groupe alcényle (de préférence en $C_2$-$C_6$ ) lié au silicium, de formule linéaire moyenne

($M^w$ )$_x$(M)$_y$(D)$_p$($D^w$)$_{p'}$ dans laquelle M, $M^w$ et D sont des motifs siloxy de formule (I.1) avec pour M: <u>a=0, b=3</u>, $M^w$ : a=1, b=2 et pour D: a=0, b=2, $D^w$: a=1, b=1; p, p' sont des entiers naturels; x,y=0,1 ou 2, x+y=2, le rapport massique $R^w$ (% en poids) des motifs alcényle sur la masse totale du POS $A_{2.3}$ est inférieur ou égal à 0,5, de préférence à 0,3 et mieux encore à 0,2;

→ et leurs mélanges.

**12.** Support, de préférence un film polymère, plus préférentiellement un film polymère en polyester **caractérisé en ce qu'**il comporte au moins un revêtement, hydrofuge et anti-adhérent à base d'une composition silicone réticulé/durci par polyaddition et comprenant:

* (A) une composante silicone alcénylée contenant au moins une huile silicone fonctionnelle comprenant au moins un PolyOrganoSiloxane (POS) comprenant des motifs de formule :

$$W_aZ_bSiO_{\frac{4-(a+b)}{2}} \qquad (I.1)$$

dans laquelle :

- W représente indépendamment un groupe fonctionnel alcényle, de préférence en C2-C6, et, plus préférentiellement encore vinyle ou allyle,
- Z représente indépendamment un groupe hydrocarboné monovalent, exempt d'action défavorable sur l'activité du catalyseur et choisi, de préférence, parmi les groupes alkyles ayant de 1 à 8 atomes de carbone inclus, avantageusement, parmi les groupes méthyle, éthyle, propyle et 3,3,3-trifluoropropyle et ainsi que parmi les groupes aryles et, avantageusement, parmi les radicaux xylyle et totyle et phényle,
- a est 1 ou 2, b est 0, 1 ou 2 et a + b est compris entre 1 et 3; cette composante silicone alcénylée A comprenant une fraction F1 et une fraction F2, différente l'une de l'autre,

. la fraction F1 comprenant au moins une huile silicone alcénylée choisie dans le groupe comprenant au moins un POS linéaire présentant, par molécule, au moins deux groupes alcényle (de préférence en $C_2$-$C_6$ ) lié au silicium,

- de formule linéaire moyenne : $M^w_r(D)_q(D^w)_{q'}M_{r'}$ dans laquelle M et D sont des motifs siloxy de formule (I.1) avec pour M : a=0, b=3, pour $M^w$ : a=1, b=2 et pour D: a=0, b=2, $D^w$: a=1, b=1; q et q' sont des entiers naturels, r,r'=0, 1 ou 2 avec r+r'=2 ;
- de viscosité v4 (en mPa.s à 25˚C) définie comme suit:
$75 \le v4 \le 4.000$, de préférence $100 \le v4 \le 2.000$, et mieux encore$100 \le v4 \le 1.000$
- et de rapport massique $R^w$ (% en poids) des motifs Si-alcényle sur la masse totale du POS de la fraction F1 de A est défini comme suit:
$0,1 \le R^w \le 3,5$, de préférence $0,2 \le R^w \le 3$, et mieux encore $0,5 \le R^w \le 3$,

F2 ayant une activité de promotion de l'adhérence sur les supports (donc de la résistance à l'abrasion) des revêtements anti-adhérence obtenus par durcissement/réticulation de la composition,
. et F2 étant formée par au moins une huile silicone alcénylée choisie dans le groupe comprenant:

→ (A$_{2.1}$) les huiles silicone monoalcénylées comprenant chacune au moins un POS linéaire présentant, par molécule, une seule extrémité porteuse d'un seul groupe alcényle (de préférence en C$_2$-C$_6$ ) lié au silicium, et de formule linéaire moyenne M$^w$D$_m$M dans laquelle M, M$^w$ et D sont des motifs siloxy de formule (I.1) avec pour M : a=0, b=3 ; M$^w$ : a=1, b=2 et pour D: a=0, b=2; et m est un entier naturel supérieur ou égal à 150;

→ (A$_{2.2}$) les huiles silicone longues comprenant chacune au moins un POS linéaire présentant, par molécule, à chacune de ses extrémités un groupe alcényle (de préférence en C$_2$-C$_6$ ) lié au silicium et de formule linéaire moyenne M$^w$D$_n$M$^w$ dans laquelle M$^w$ et D sont des motif siloxy de formule (I.1) avec pour M$^w$ : a=1, b=2 et pour D: a=0, b=2; et n est un entier naturel supérieur ou égal à 250 ; la viscosité v2 desdites huiles A$_{2.2}$ étant comprise entre 3000 et 200000 mPa.s;

→ (A$_{2.3}$) les huiles silicone "faiblement" alcénylées comprenant chacune au moins un POS linéaire présentant, par molécule, au moins un groupe alcényle (de préférence en C$_2$-C$_6$ ) lié au silicium, de formule linéaire moyenne

(M$^w$ )$_x$(M)$_y$(D)$_p$(D$^w$)$_{p'}$ dans laquelle M, M$^w$ et D sont des motifs siloxy de formule (I.1) avec pour M : a=0, b=3, M$^w$ : a=1, b=2 et pour D: a=0, b=2, D$^w$: a=1, b=1; p, p' sont des entiers naturels; x, y=0,1 ou 2, x+y=2, le rapport massique R$^w$ (% en poids) des motifs alcényle sur la masse totale du POS A$_{2.3}$ est inférieur ou égal à 0,5, de préférence à 0,3 et mieux encore à 0,2;

→ et leurs mélanges;

* (B) au moins une huile silicone réticulante comprenant au moins un POS hydrogéné présentant, par molécule, au moins trois atomes d'hydrogène liés au silicium;
* (C) au moins un catalyseur composé d'au moins un métal appartenant au groupe du platine;
* (D) éventuellement au moins un additif promoteur d'accrochage;
* (E) éventuellement au moins un inhibiteur de réticulation;
* (F) éventuellement, un système modulateur d'adhérence;
* (G) éventuellement, au moins un diluant;
* (H) éventuellement, au moins un autre additif fonctionnel, notamment anti-misting.

## Claims

1. Silicone composition capable of cross-linking/curing by polyaddition, to form a coating which is water-repellent and non-stick for supports preferably in the form of polymer films, **characterized in that** it comprises:

   * (A) an alkenylated silicone component containing at least one functional silicone oil comprising at least one PolyOrganoSiloxane (POS) comprising units of formula:

   $$W_a Z_b SiO_{\frac{4-(a+b)}{2}} \quad (I.1)$$

   in which:

   - W represents independently a functional alkenyl group, preferably C2-C6, and, still more preferably vinyl or allyl,
   - Z represents independently a monovalent hydrocarbon group, with no unfavourable effect on the activity of the catalyst and chosen, preferably, from the alkyl groups having 1 to 8 carbon atoms advantageously included among the methyl, ethyl, propyl and 3,3,3-trifluoropropyl groups as well as among the aryl groups and, advantageously, among the xylyl and totyl and phenyl radicals,
   - a is 1 or 2, b is 0, 1 or 2 and a + b is comprised between 1 and 3;

   this alkenylated silicone component A comprising a fraction F1 and a fraction F2 which are different from one another,

   . fraction F1 comprising at least one alkenylated silicone oil chosen from the group comprising at least one linear POS having, per molecule, at least two alkenyl groups (preferably C$_2$-C$_6$) bound to the silicon,

- of average linear formula: $M^w{}_r(D)_q(D^w)_{q'}M_{r'}$ in which M and D are siloxy units of formula (I.1) with for M: a = 0, b = 3, for $M^w$: a = 1, b = 2 and for D: a = 0, b = 2, $D^w$: a = 1, b = 1; q and q' are natural integers, r,r' = 0, 1 or 2 with r+r' =2;

- of viscosity v4 (in mPa.s at 25˚C) defined as follows:

$75 \leq v4 \leq 4{,}000$, preferably $100 \leq v4 \leq 2{,}000$,

and better still $100 \leq v4 \leq 1{,}000$

- and with a mass ratio $R^w$ (% by weight) of the Si-alkenyl units to the total mass of the POS of the fraction F1 of A is defined as follows:

$0.1 \leq R^w \leq 3.5$, preferably $0.2 \leq R^w \leq 3$,

and better still $0.5 \leq R^w \leq 3$,

. F2 having an activity which promotes the adhesion on the supports (therefore of the abrasion resistance) of the non-stick coatings obtained by curing/cross-linking of the composition,

. and F2 being formed by at least one alkenylated silicone oil chosen from the group comprising:

$\rightarrow$ ($A_{2.1}$) the monoalkenylated silicone oils each comprising at least one linear POS having, per molecule, a single end bearing a single alkenyl group (preferably $C_2$-$C_6$) bound to the silicon, and of average linear formula $M^w D_m M$ in which M, $M^w$ and D are siloxy units of formula (I.1) with for M: a = 0, b = 3; $M^w$: a = 1, b = 2 and for D:

a = 0, b = 2; and m is a natural integer greater than or equal to 150;

$\rightarrow$ ($A_{2.2}$) the long silicone oils each comprising at least one linear POS having, per molecule, at each of its ends an alkenyl group (preferably $C_2$-$C_6$) bound to the silicon and of average linear formula $M^w D_n M^w$ in which $M^w$ and D are siloxy units of formula (I.1) with for $M^w$: a = 1, b = 2 and for D: a = 0, b = 2; and n is a natural integer greater than or equal to 250; the viscosity v2 of said oils $A_{2.2}$ being comprised between 3000 and 180,000 mPa.s;

$\rightarrow$ ($A_{2.3}$) the "weakly" alkenylated silicone oils each comprising at least one linear POS having, per molecule, at least one alkenyl group (preferably $C_2$-$C_6$) bound to the silicon, of average linear formula $(M^w)_x(M)_y(D)_p(D^w)_{p'}$ in which M, $M^w$ and D are siloxy units of formula (I.1) with for M : a = 0, b = 3, $M^w$: a = 1, b = 2 and for D: a = 0, b = 2, $D^w$: a = 1, b = 1; p, p' are natural integers; x,y = 0,1 or 2, x + y = 2, the mass ratio $R^w$ (% by weight) of the alkenyl units to the total mass of the POS $A_{2.3}$ is less than or equal to 0.5, preferably 0.3 and better still 0.2;

$\rightarrow$ and mixtures thereof;

* (B) at least one cross-linking silicone oil comprising at least one hydrogenated POS having, per molecule, at least three hydrogen atoms bound to the silicon;

* (C) at least one catalyst comprising at least one metal belonging to the platinum group;

* (D) optionally at least one attachment promoting additive;

* (E) optionally at least one cross-linking inhibitor;

* (F) optionally an adhesion modulating system;

* (G) optionally, at least one diluent;

* (H) optionally, at least one other functional, in particular anti-misting, additive.

2. Composition according to claim 1, **characterized in that** the fraction F1 of the alkenylated silicone component A represents at least 30% by weight of A, preferably at least 50%.

3. Composition according to claim 1, **characterized in that** the oils $A_{2.1}$ $A_{2.2}$ $A_{2.3}$ are chosen such that in their simplified formulae: m/2, n and p/p' are respectively greater than or equal to 70, preferably greater than or equal to 100.

4. Composition according to claim 1, **characterized in that** the viscosity, respectively v1, v2, v3, of the oils $A_{2.1}$, $A_{2.2}$ and $A_{2.3}$ (in mPa.s at 25˚C) is defined as follows:

$\rightarrow$ $400 \leq v1 \leq 60{,}000$, preferably $500 \leq v1 \leq 50{,}000$,

and better still $800 \leq v1 \leq 30{,}000$ ;

$\rightarrow$ $3000 \leq v2 \leq 180{,}000$, preferably $5000 \leq v2 \leq 100{,}000$,

and better still $5000 \leq v2 \leq 3000$;

$\rightarrow$ $800 \leq v3 \leq 15000$, preferably $1000 \leq v3 \leq 10{,}000$,

and better still $1000 \leq v3 \leq 5000$.

5. Composition according to claim 1, **characterized by** an Si-H / Si-alkenyl molar ratio, such that:

$$1.0 \leq \text{Si-H/Si-alkenyl} \leq 7$$

preferably

$$1.5 \leq \text{Si-H/Si-alkenyl} \leq 5.$$

6. Composition according to claim 1, **characterized in that** the mass ratio $R^w$ (% by weight) of the Si-alkenyl units to the total mass of F2 is defined as follows:

→ for $A_{2.1}$
$0.05 < R^w < 0.2$; preferably $0.07 < R^w < 0.15$;
→ for $A_{2.2}$
$0.05 < R^w < 0.25$; preferably $0.1 < R^w < 0.2$.

7. Composition according to claim 1, **characterized in that** the cross-linking silicone oil B comprises:

- at least one POS (B1) of the following average linear formula:

$$M_\alpha M'_\beta D_\gamma D'_\delta$$

with

- • $M = (R^1)_3 SiO_{1/2}$
- • $M' = H_a(R^1)_b SiO_{1/2}$, a + b = 3, a = 1, 2 or 3, b = 0 to 3
- • $D = (R^2)_2 SiO_{2/2}$
- • $D' = HR^3 SiO_{2/2}$
- • $R^1$, $R^2$, $R^3$ corresponding independently to the same definition as the group Z of formula (I.1);
- • $\alpha = 2$, $\beta = 0$, $\delta + \gamma$ comprised between 10 and 200, preferably between 20 and 100, more preferably between 30 and 70, and better still $\gamma = 0$; or
- • $0 \leq \alpha \leq 2$, $0 \leq \beta \leq 2$, $0 \leq \gamma$, $0 < \delta$
$0 \leq \gamma/\delta$, preferably $0 \leq \gamma/\delta \leq 2$, and still more preferably
$0 \leq \gamma/\delta \leq 1.5$;
$15 \leq (\beta/\delta) \times 1000 \leq 150$, preferably $15 \leq (\beta/\delta) \times 1000 \leq 80$; and
still more preferably $15 \leq (\beta/\delta) \times 1000 \leq 60$

► having a viscosity v5 (in mPa.s at 25˚C) defined as follows:
$5 \leq v5 \leq 500$, preferably $10 \leq v5 \leq 200$, and better still $10 \leq v5 \leq 100$
► and having an Si-H titre (% by weight relative to this POS B1) is defined as follows:
$5 \leq \text{Si-H} \leq 46$, preferably $20 \leq \text{Si-H} \leq 46$, and better still $30 \leq \text{Si-H} \leq 46$;

- and/or at least one branched POS (B2) of the following average formula: $M'_h Q_k$ with

- • $M' = H_a(R^1)_b SiO_{1/2}$, a + b = 3, a = 1, 2 or 3, b = 0 to 3
- • $Q = SiO_{4/2}$
- • $4 \leq h \leq 20$; $1 \leq k \leq 4$ or 5

► having a viscosity v5 (in mPa.s at 25˚C) defined as follows:
$5 \leq v5' \leq 100$, preferably $10 \leq v5' \leq 30$;
► and having an Si-H titre (% by weight relative to this POS B2) is defined as follows:
$15 \leq \text{Si-H} \leq 40$, preferably $25 \leq \text{Si-H} \leq 35$, and better still $25 \leq \text{Si-H} \leq 30$.

8. Composition according to any one of the preceding claims, **characterized by** a viscosity v6 (in mPa.s at 25˚C) defined as follows:

$100 \leq v6 \leq 3{,}000$, preferably $200 \leq v6 \leq 2{,}000$,
and better still $500 \leq v6 \leq 1{,}000$.

**9.** Composition according to any one of the preceding claims, **characterized in that** it comprises at least one attachment promoting additive (D) chosen from the epoxy-functional silanes, preferably from the group comprising:

> o (3,4-epoxycyclohexyl)ethyltriethoxy-silane [Coatosil® 1770],
> o Tris(3-(trimethoxysilyl)propyl)isocyanurate [A-Link 597],
> o GLYMO,
> o MEMO,
> o silicone compounds comprising both SiH and SiVi groups and epoxy-functional groups,
> o and mixtures thereof.

**10.** Process for producing a water-repellent and non-stick coating on a support, preferably a polymer film, more preferably a polymer film made of polyester, **characterized in that** it involves applying to this support at least one layer of a silicone composition according to any one of the preceding claims, and ensuring that this layer cross-links, preferably by activating it by heating.

**11.** Process for increasing the attachment (i.e. abrasion resistance) of a crosslinked/cured, water-repellent and non-stick silicone coating, applied to a support, preferably a polymer film, more preferably a polymer film made of polyester, and obtained from a silicone composition capable of cross-linking/curing by polyaddition and comprising:

> * (A) an alkenylated silicone component containing at least one functional silicone oil comprising at least one PolyOrganoSiloxane (POS) comprising units of formula:

$$W_a Z_b SiO_{\frac{4-(a+b)}{2}} \qquad (I.1)$$

> in which:

>> - W represents independently a functional alkenyl group, preferably C2-C6, and, still more preferably vinyl or allyl,
>> - Z represents independently a monovalent hydrocarbon group, with no unfavourable effect on the activity of the catalyst and chosen, preferably, from the alkyl groups having 1 to 8 carbon atoms advantageously included among the methyl, ethyl, propyl and 3,3,3- trifluoropropyl groups as well as among the aryl groups and, advantageously, among the xylyl and totyl and phenyl radicals,
>> - a is 1 or 2, b is 0, 1 or 2 and a + b is comprised between 1 and 3;

>> * (B) at least one cross-linking silicone oil comprising at least one hydrogenated POS having, per molecule, at least three hydrogen atoms bound to the silicon;
>> * (C) at least one catalyst comprising at least one metal belonging to the platinum group;
>> * (D) optionally at least one attachment promoting additive;
>> * (E) optionally at least one cross-linking inhibitor;
>> * (F) optionally, an adhesion modulating system;
>> * (G) optionally, at least one diluent;
>> * (H) optionally, at least one other functional additive, in particular anti-misting;
>> * and mixtures thereof ;

> **characterized in that** it involves using a silicone composition the alkenylated silicone component A of which comprises a fraction F1 and a fraction F2, different from one another,

>> . fraction F1 comprising at least one alkenylated silicone oil chosen from the group comprising at least one linear POS having, per molecule, at least two alkenyl groups (preferably C2-C6) bound to the silicon,

>>> - of average linear formula: $M^w{}_r(D)_q(D^w)_{q'}M_{r'}$ in which M and D are siloxy units of formula (I.1) with for M: a = 0, b = 3, for $M^w$: a = 1, b = 2 and for D: a = 0, b = 2, $D^w$: a = 1, b = 1; q and q' are natural integers, r,r' = 0, 1 or 2 with r + r' = 2;
- of viscosity v4 (in mPa.s at 25°C) defined as follows:
$75 \leq v4 \leq 4,000$, preferably $100 \leq v4 \leq 2,000$, and better still $100 \leq v4 \leq 1,000$
- and with a mass ratio $R^w$ (% by weight) of the Si-alkenyl units to the total mass of the POS of the fraction F1 of A is defined as follows:
$0.1 \leq R^w \leq 3.5$, preferably $0.2 \leq R^w \leq 3$, and better still $0.5 \leq R^w \leq 3$,

. F2 having an activity which promotes the adhesion to the supports (therefore abrasion resistance) of the non-stick coatings obtained by curing/cross-linking of the composition,
. and F2 being formed by at least one alkenylated silicone oil chosen from the group comprising:

→ ($A_{2.1}$) the monoalkenylated silicone oils each comprising at least one linear POS having, per molecule, a single end bearing a single alkenyl group (preferably $C_2$-$C_6$) bound to the silicon, and of average linear formula $M^w D_m M$ in which M, $M^w$ and D are siloxy units of formula (I.1) with for M: a = 0, b = 3; $M^w$: a = 1, b = 2 and for D: a = 0, b = 2; and m is a natural integer greater than or equal to 150;
→ ($A_{2.2}$) the long silicone oils each comprising at least one linear POS having, per molecule, at each of its ends an alkenyl group (preferably $C_2$-$C_6$) bound to the silicon and of average linear formula $M^w D_n M^w$ in which $M^w$ and D are siloxy units of formula (I.1) with for $M^w$: a = 1, b = 2 and for D: a = 0, b = 2; and n is a natural integer greater than or equal to 250; the viscosity v2 of said oils $A_{2.2}$ being comprised between 3000 and 200,000 mPa.s;
→ ($A_{2.3}$) the "weakly" alkenylated silicone oils each comprising at least one linear POS having, per molecule, at least one alkenyl group (preferably $C_2$-$C_6$) bound to the silicon, of average linear formula $(M^w)_x(M)_y(D)_p(D^w)_{p'}$ in which M, $M^w$ and D are siloxy units of formula (I.1) with for M : a = 0, b = 3, $M^w$: a = 1, b = 2 and for D: a = 0, b = 2, $D^w$: a = 1, b = 1; p, p' are natural integers; x,y = 0, 1 or 2, x + y = 2, the mass ratio $R^w$ (% by weight) of the alkenyl units to the total mass of the POS $A_{2.3}$ is less than or equal to 0.5, preferably 0.3 and better still 0.2;
→ and mixtures thereof.

12. Support, preferably a polymer film, more preferably a polymer film made of polyester **characterized in that** it comprises at least one water-repellent and non-stick coating based on a silicone composition cross-linked/cured by polyaddition and comprising:

* (A) an alkenylated silicone component containing at least one functional silicone oil comprising at least one PolyOrganoSiloxane (POS) comprising units of formula:

$$W_a Z_b SiO_{\frac{4-(a+b)}{2}} \qquad (I.1)$$

in which:

- W represents independently a functional alkenyl group, preferably C2-C6, and, still more preferably vinyl or allyl,
- Z represents independently a monovalent hydrocarbon group, with no unfavourable effect on the activity of the catalyst and chosen, preferably, from the alkyl groups having 1 to 8 carbon atoms advantageously included among the methyl, ethyl, propyl and 3,3,3- trifluoropropyl groups as well as among the aryl groups and, advantageously, among the xylyl and totyl and phenyl radicals,
- a is 1 or 2, b is 0, 1 or 2 and a + b is comprised between 1 and 3;

this alkenylated silicone component A comprising a fraction F1 and a fraction F2 which are different from one another,

. fraction F1 comprising at least one alkenylated silicone oil chosen from the group comprising at least one linear POS having, per molecule, at least two alkenyl groups (preferably $C_2$-$C_6$) bound to the silicon,

- of average linear formula: $M^w_r(D)_q(D^w)_{q'} M_{r'}$ in which M and D are siloxy units of formula (I.1) with for M: a = 0, b = 3, for $M^w$: a = 1, b = 2 and for D: a = 0, b = 2, $D^w$: a = 1, b = 1; q and q' are natural integers, r,r' = 0, 1 or 2 with r + r' = 2;
- of viscosity v4 (in mPa.s at 25°C) defined as follows:
$75 \leq v4 \leq 4,000$, preferably $100 \leq v4 \leq 2,000$, and better still $100 \leq v4 \leq 1,000$
- and with a mass ratio $R^w$ (% by weight) of the Si-alkenyl units to the total mass of the POS of the fraction F1 of A is defined as follows:
$0.1 \leq R^w \leq 3.5$, preferably $0.2 \leq R^w \leq 3$, and better still $0.5 \leq R^w \leq 3$,

. F2 having an activity which promotes the adhesion to the supports (therefore abrasion resistance) of the non-stick coatings obtained by curing/cross-linking of the composition,
. and F2 being formed by at least one alkenylated silicone oil chosen from the group comprising:

$\rightarrow$ ($A_{2.1}$) the monoalkenylated silicone oils each comprising at least one linear POS having, per molecule, a single end bearing a single alkenyl group (preferably $C_2$-$C_6$) bound to the silicon, and of average linear formula $M^wD_mM$ in which M, $M^w$ and D are siloxy units of formula (I.1) with for M: a = 0, b = 3; $M^w$: a = 1, b = 2 and for D: a = 0, b = 2; and m is a natural integer greater than or equal to 150;
$\rightarrow$ ($A_{2.2}$) the long silicone oils each comprising at least one linear POS having, per molecule, at each of its ends an alkenyl group (preferably $C_2$-$C_6$) bound to the silicon and of average linear formula $M^wD_nM^w$ in which $M^w$ and D are siloxy units of formula (I.1) with for $M^w$: a = 1, b = 2 and for D: a = 0, b = 2; and n is a natural integer greater than or equal to 250; the viscosity v2 of said oils $A_{2.2}$ being comprised between 3000 and 200,000 mPa.s;
$\rightarrow$ ($A_{2.3}$) the "weakly" alkenylated silicone oils each comprising at least one linear POS having, per molecule, at least one alkenyl group (preferably $C_2$-$C_6$) bound to the silicon, of average linear formula $(M^w)_x(M)_y(D)_p(D^w)_{p'}$ in which M, $M^w$ and D are siloxy units of formula (I.1) with for M : a = 0, b = 3, $M^w$: a = 1, b = 2 and for D: a = 0, b = 2, $D^w$: a = 1, b = 1; p, p' are natural integers; x,y = 0, 1 or 2, x + y = 2, the mass ratio $R^w$ (% by weight) of the alkenyl units to the total mass of the POS $A_{2.3}$ is less than or equal to 0.5, preferably 0.3 and better still 0.2;
$\rightarrow$ and mixtures thereof.

* (B) at least one cross-linking silicone oil comprising at least one hydrogenated POS having, per molecule, at least three hydrogen atoms bound to the silicon;
* (C) at least one catalyst comprising at least one metal belonging to the platinum group;
* (D) optionally at least one attachment promoting additive;
* (E) optionally at least one cross-linking inhibitor;
* (F) optionally, an adhesion modulating system;
* (G) optionally, at least one diluent;
* (H) optionally, at least one other functional additive, in particular anti-misting.

**Patentansprüche**

1. Silikonzusammensetzung, die durch Polyaddition vernetzbar/härtbar ist, zum Bilden einer wasserabweisenden Antihaftbeschichtung auf Trägern, vorzugsweise in Gestalt von Polymerfilmen, **dadurch gekennzeichnet, dass** sie umfasst:

* (A) einen alkenylierten Silikonbestandteil, der zumindest ein funktionelles Silikonöl enthält, das zumindest ein PolyOrganoSiloxan (POS) umfasst, das Motive der Formel:

$$W_a Z_b SiO_{\frac{4-(a+b)}{2}} \qquad (I.1)$$

enthält, bei welcher:

- W unabhängig eine funktionelle Alkenylgruppe, vorzugsweise aus C2-C6, und noch stärker bevorzugt aus Vinyl und Allyl darstellt,
- Z unabhängig eine monovalente Kohlenwasserstoffgruppe ohne ungünstige Wirkung auf die Aktivität des Katalysators darstellt und vorzugsweise ausgewählt ist unter den Alkylgruppen, die von 1 bis 8 Kohlenstoffatome eingeschlossen haben, vorteilhafterweise unter Methyl-, Ethyl-, Propyl- und 3,3,3-Trifluorpropyl-Gruppen sowie unter Arylgruppen und vorteilhafterweise unter Xylyl- und Totyl-und Phenyl-Radikalen,
- a gleich 1 oder 2 ist, b gleich 0, 1 oder 2 ist und a + b von 1 bis 3 ist;
wobei der alkenylierte Silikonbestandteil einen Anteil F1 und einen Anteil F2 enthält, welche sich voneinander unterscheiden,
wobei der Anteil F1 zumindest ein alkenyliertes Silikonöl, ausgewählt aus der Gruppe, die zumindest ein lineares POS umfasst, das pro Molekül zumindest zwei Alkenylgruppen (vorzugsweise aus $C_2$-$C_6$), die an Silizium gebunden sind, zeigt,
- der durchschnittlichen linearen Formel:
$M^w_r(D)_q(D^w)_{q'}M_{r'}$, bei welcher M und D Siloxymotive der Formel (I.1) sind, mit für M : a=0, b=3, für $M^w$ : a=1, b=2 und für D: a=0, b=2, $D^w$: a=1, b=1; q und q' sind natürliche ganze Zahlen, r,r'=0, 1 oder 2 mit r+r'=2;
- der Viskosität v4 (in mPa.s bei 25˚C), die wie folgt definiert ist:
$75 \leq v4 \leq 4.000$, vorzugsweise $100 \leq v4 \leq 2.000$ und besser noch $100 \leq v4 \leq 1.000$
- und dem Massenanteil $R^w$ (Gew.-%) der Si-Alkenylmotive zur Gesamtmasse des POS des Anteils F1 des A, die wie folgt definiert ist:
$0{,}1 \leq R^w \leq 3{,}5$, vorzugsweise $0{,}2 \leq R^w \leq 3$, und noch besser $0{,}5 \leq R^w \leq 3$,
wobei F2 eine Aktivität der Förderung der Haftung auf den Trägern (folglich des Abriebwiderstands) der Antihaftbeschichtungen, die durch Härtung/Vernetzung der Zusammensetzung erhalten sind, aufweist,
und F2 ist aus zumindest einem alkenylierten Silikonöl gebildet, ausgewählt aus der Gruppe, die umfasst:

→ ($A_{2.1}$) monoalkenylierte Silikonöle, umfassend jeweils zumindest ein lineares POS, das pro Molekül ein einziges Ende aufweist, das Träger einer einzigen Alkenylgruppe ist (vorzugsweise aus $C_2$-$C_6$), die an Silizium gebunden ist, und der durchschnittlichen linearen Formel $M^w D_m M$, bei welcher M, $M^w$ und D Siloxymotive der Formel (I.1) sind, mit für M : a=0, b=3, $M^w$ : a=1, b=2 und für D: a=0, b=2; und m ist eine natürliche ganze Zahl gleich oder größer als 150;
→ ($A_{2.2}$) lange Silikonöle, umfassend jeweils zumindest ein lineares POS, das pro Molekül an jeder seiner Endgruppen eine Alkenylgruppe (vorzugsweise aus $C_2$-$C_6$) aufweist, die an Silizium gebunden ist, und der durchschnittlichen linearen Formel $M^w D_n M^w$, bei welcher $M^w$ und D Siloxymotive der Formel (I.1) sind, mit für $M^w$ : a=1, b=2 und für D: a=0, b=2; und n ist eine natürliche ganze Zahl gleich oder größer als 250; wobei die Viskosität v2 der Öle $A_{2.2}$ von 3000 bis 180000 mPa.s beträgt;
→ ($A_{2.3}$) "schwach" alkenylierte Silikonöle, umfassend jeweils zumindest ein lineares POS, das pro Molekül zumindest eine Alkenylgruppe (vorzugsweise aus $C_2$-$C_6$) aufweist, die an Silizium gebunden ist, und der durchschnittlichen linearen Formel $(M^w)_x(M)_y(O)_p(O^w)_{p'}$, bei welcher M, $M^w$ und D Siloxymotive der Formel (I.1) sind, mit für M: a=0, b=3, $M^w$ : a=1, b=2 und für D: a=0, b=2, $D^w$: a=1, b=1; p, p' sind ganze natürliche Zahlen; x,y=0, 1 oder 2, x+y=2, der Massenanteil $R^w$ (Gew.-%) der Alkenylmotive zur Gesamtmasse des POS $A_{2.3}$ ist kleiner oder gleich 0,5, vorzugsweise 0,3, noch besser 0,2;
→ und deren Mischungen;

* (B) zumindest ein Vernetzungssilikonöl, umfassend zumindest ein hydriertes POS, das pro Molekül zumindest drei an Silizium gebundene Wasserstoffatome aufweist;
* (C) zumindest einen Katalysator, zusammengesetzt aus zumindest einem Metall, das der Platingruppe angehört;
* (D) möglicherweise zumindest ein Kopplungsadditiv;
* (E) möglicherweise zumindest einen Vernetzungsinhibitor;
* (F) möglicherweise ein Adhäsionsmodulationssystem;
* (G) möglicherweise zumindest ein Verdünnungsmittel;
* (H) möglicherweise zumindest ein weiteres funktionelles Additiv, insbesondere ein Antibeschlagmittel bzw. anti-misting.

2. Zusammensetzung nach Anspruch 1, **dadurch gekennzeichnet, dass** der Anteil F1 des Bestandteils A zumindest 30 Gew.-%, vorzugsweise zumindest 50%, von A darstellt.

3. Zusammensetzung nach Anspruch 1, **dadurch gekennzeichnet, dass** die Öle $A_{2.1}$ $A_{2.2}$ bzw. $A_{2.3}$ von solcher Art ausgewählt sind, dass in deren vereinfachten Formeln: m/2, n und p/p' jeweils größer oder gleich 70, vorzugsweise größer oder gleich 100 sind.

4. Zusammensetzung nach Anspruch 1, **dadurch gekennzeichnet, dass** die Viskosität v1, v2, v3 der Öle $A_{2.1}$ $A_{2.2}$

bzw. $A_{2.3}$ (in mPa.s bei 25°C) wie folgt definiert ist:

$\rightarrow$ 400 ≤ v1 ≤ 60000, vorzugsweise 500 ≤ v1 ≤ 50.000, noch besser 800 ≤ v1 ≤ 30000;
$\rightarrow$ 3000 ≤ v2 ≤ 180000, vorzugsweise 5000 ≤ v2 ≤ 100000, noch besser 5000 ≤ v2 ≤ 3000;
$\rightarrow$ 800 ≤ v3 ≤ 15000, vorzugsweise 1000 ≤ v3 ≤ 10000, noch besser 1000 ≤ v3 ≤ 5000.

**5.** Zusammensetzung nach Anspruch 1, **gekennzeichnet durch** ein Molverhältnis Si-H / Si-Alkenyl, bei dem:

$$1{,}0 \ \leq \ \text{Si-H/Si-Alkenyl} \ \leq \ 7$$

vorzugweise

$$1{,}5 \ \leq \ \text{Si-H/Si-Alkenyl} \ \leq \ 5.$$

**6.** Zusammensetzung nach Anspruch 1, **dadurch gekennzeichnet, dass** der Massenanteil $R^w$ (Gew.-%) der Si-Alkenylmotive zur Gesamtmasse von F2 wie folgt definiert ist:

$\rightarrow$ für $A_{2.1}$
0,05 ≤ $R^w$ ≤ 0,2; vorzugsweise 0,07 ≤ $R^w$ ≤ 0,15;
$\rightarrow$ für $A_{2.2}$
0,05 ≤ $R^w$ ≤ 0,25; vorzugsweise 0,1 ≤ $R^w$ ≤ 0,2.

**7.** Zusammensetzung nach Anspruch 1, **dadurch gekennzeichnet, dass** das Vernetzungssilikonöl B enthält:

- zumindest ein POS (B1) der folgenden durchschnittlichen linearen Formel:

$$M_\alpha \, M'_\beta \, D_\gamma \, D'_\delta$$

mit

- $M = (R^1)_3 SiO_{1/2}$
- $M' = H_a(R^1)_b SiO_{1/2}$, a+b=3, a=1, 2 oder 3, b=0 bis 3
- $D = (R^2)_2 SiO_{2/2}$
- $D' = HR^3 SiO_{2/2}$
- $R^1$, $R^2$, $R^3$ entsprechen unabhängig voneinander der gleichen Definition wie die Gruppe Z der Formel (I.1);
- $\alpha$=2, $\beta$=0, $\delta$+$\gamma$ betragen von 10 bis 200, vorzugsweise von 20 bis 100, stärker bevorzugt von 30 bis 70 und noch besser $\gamma$=0; oder
- 0 ≤ $\alpha$ ≤ 2, 0 ≤ $\beta$ ≤ 2, 0 ≤ $\gamma$, 0 < $\delta$
0 ≤ $\gamma/\delta$, vorzugsweise 0 ≤ $\gamma/\delta$ ≤ 2, noch stärker bevorzugt 0 ≤ $\gamma/\delta$ ≤ 1,5;
15 ≤ ($\beta/\delta$) x 1000 ≤ 150, vorzugsweise 15 ≤ ($\beta/\delta$) x 1000 ≤ 80; und noch stärker bevorzugt 15 ≤ ($\beta/\delta$) x 1000 ≤ 60

♦ besitzend eine Viskosität v5 (in mPa.s bei 25°C), die wie folgt definiert ist: 5 ≤ v5 ≤ 500, vorzugsweise 10 ≤ v5 ≤ 200, noch besser 10 ≤ v5 ≤ 100
♦ und aufweisend einen Gehalt an Si-H (Gew.-% im Vergleich zu dem POS B1), der wie folgt definiert ist: 5 ≤ Si-H ≤ 46; vorzugsweise 20 ≤ Si-H ≤ 46, und noch besser 30 ≤ Si-H ≤ 46;

- und/oder zumindest ein verzweigtes POS (B2) der folgenden durchschnittlichen Formel:

$$M'_h Q_k$$

mit

- $M' = H_a(R^1)_b SiO_{1/2}$, a+b=3, a=1, 2 oder 3, b=0 bis 3
- $Q = SiO_{4/2}$
- 4 ≤ h ≤ 20 1 ≤ k ≤ 4 oder 5

♦ besitzend eine Viskosität v5' (in mPa.s bei 25°C), die wie folgt definiert ist: $5 \leq v5' \leq 100$, vorzugsweise $10 \leq v5' \leq 30$;

♦ und aufweisend einen Gehalt an Si-H (Gew.-% im Vergleich zu dem POS B2), der wie folgt definiert ist: $15 \leq$ Si-H $\leq 40$; vorzugsweise $24 \leq$ Si-H $\leq 35$, und noch besser $25 \leq$ Si-H $\leq 30$.

8. Zusammensetzung nach einem der vorhergehenden Ansprüche, **gekennzeichnet durch** eine Viskosität v6, die wie folgt definiert ist: $100 \leq v6 \leq 3.000$, vorzugsweise $200 \leq v6 \leq 2.000$, und noch besser $500 \leq v6 \leq 1.000$.

9. Zusammensetzung nach einem der vorhergehenden Ansprüche, **dadurch gekennzeichnet, dass** sie zumindest ein Kopplungsadditiv (D) enthält, ausgewählt aus funktionellen Epoxysilanen, vorzugsweise aus der Gruppe, die umfasst:

    o (3,4-Epoxycyclohexyl)Ethyltriethoxysilan [Coatosil® 1770],
    o Tris(3-(Trimethoxysilyl)propyl)isocyanurat [A-Link 597],
    o GLYMO,
    o MEMO,
    o Silikonverbindungen, die zugleich SiH- oder SiVi-Gruppierungen und Epoxy-funktionelle Gruppierungen beinhalten
    o und deren Mischungen.

10. Verfahren der Verwirklichung einer wasserabweisenden Antihaftbeschichtung auf einem Träger, vorzugsweise einem Polymerfilm, stärker bevorzugt einem Polyesterpolymerfilm, **dadurch gekennzeichnet, dass** es besteht aus dem Aufbringen zumindest einer Lage einer Silikonzusammensetzung nach einem der vorhergehenden Ansprüche auf dem Träger, und aus dem so Einrichten, dass die Lage sich vernetzt, vorzugsweise durch Aktivieren durch Erwärmen.

11. Verfahren zur Haftungsverbesserung (d.h. Abriebbeständigkeit) einer vernetzten/gehärteten wasserabweisenden Antihaftbeschichtung, die auf einem Träger, vorzugsweise einem Polymerfilm, stärker bevorzugt einem Polyesterpolymerfilm, aufgetragen ist, und erhalten von einer durch Polyaddition härtbaren/vernetzbaren Silikonzusammensetzung, und enthaltend:

\* (A) einen alkenylierten Silikonbestandteil, der zumindest ein funktionelles Silikonöl enthält, das zumindest ein PolyOrganoSiloxan (POS) umfasst, das Motive der Formel:

$$W_a Z_b SiO_{\frac{4-(a+b)}{2}} \qquad (I.1)$$

enthält, bei welcher:

- W unabhängig eine funktionelle Alkenylgruppe, vorzugsweise aus C2-C6, und noch stärker bevorzugt aus Vinyl und Allyl darstellt,
- Z unabhängig eine monovalente Kohlenwasserstoffgruppe ohne ungünstige Wirkung auf die Aktivität des Katalysators darstellt und vorzugsweise ausgewählt ist unter den Alkylgruppen, die von 1 bis 8 Kohlenstoffatome eingeschlossen haben, vorteilhafterweise unter Methyl-, Ethyl-, Propyl- und 3,3,3-Trifluorpropyl-Gruppen sowie unter Arylgruppen und vorteilhafterweise unter Xylyl- und Totyl-und Phenyl-Radikalen,
- a gleich 1 oder 2 ist, b gleich 0, 1 oder 2 ist und a + b von 1 bis 3 ist;

\* (B) zumindest ein Vernetzungssilikonöl, umfassend zumindest ein hydriertes POS, das pro Molekül zumindest drei an Silizium gebundene Wasserstoffatome aufweist;
\* (C) zumindest einen Katalysator, zusammengesetzt aus zumindest einem Metall, das der Platingruppe angehört;
\* (D) möglicherweise zumindest ein Kopplungsadditiv;
\* (E) möglicherweise zumindest einen Vernetzungsinhibitor;
\* (F) möglicherweise ein Adhäsionsmodulationssystem;
\* (G) möglicherweise zumindest ein Verdünnungsmittel;
\* (H) möglicherweise zumindest ein weiteres funktionelles Additiv, insbesondere ein Antibeschlagmittel bzw.

anti-misting;

* und deren Mischungen;

**dadurch gekennzeichnet, dass** es aus dem Verwenden einer Silikonzusammensetzung besteht, deren alkenylierter Silikonbestandteil A einen Anteil F1 und einen Anteil F2 enthält, welche sich voneinander unterscheiden, wobei der Anteil F1 zumindest ein alkenyliertes Silikonöl, das zumindest ein lineares POS umfasst, das pro Molekül zumindest zwei Alkenylgruppen (vorzugsweise aus $C_2$-$C_6$), die an Silizium gebunden sind, zeigt,

- der durchschnittlichen linearen Formel: $M^w{}_r(D)_q(D^w)_{q'}M_r$, bei welcher M und D Siloxymotive der Formel (I.1) sind, mit für M : a=0, b=3, für $M^w$ : a=1, b=2 und für D: a=0, b=2, $D^w$: a=1, b=1; q und q' sind natürliche ganze Zahlen, r,r'=0, 1 oder 2 mit r+r'=2;
- der Viskosität v4 (in mPa.s bei 25°C), die wie folgt definiert ist:
$75 \leq v4 \leq 4.000$, vorzugsweise $100 \leq v4 \leq 2.000$ und besser noch $100 \leq v4 \leq 1.000$
- und dem Massenanteil $R^w$ (Gew.-%) der Si-Alkenylmotive zur Gesamtmasse des POS des Anteils F1 des A, die wie folgt definiert ist:
$0{,}1 \leq R^w \leq 3{,}5$, vorzugsweise $0{,}2 \leq R^w \leq 3$, und noch besser $0{,}5 \leq R^w \leq 3$,

wobei F2 eine Aktivität des Fortschreitens der Haftung auf den Trägern (folglich der Abriebwiderstands) der Antihaftbeschichtungen, die durch Härtung/Vernetzung der Zusammensetzung erhalten sind, aufweisen, und F2 sind aus zumindest einem alkenylierten Silikonöl gebildet, ausgewählt aus der Gruppe, die umfasst:

→ ($A_{2.1}$) monoalkenylierte Silikonöle, umfassend jeweils zumindest ein lineares POS, das pro Molekül ein einziges Ende aufweist, das Träger einer einzigen Alkenylgruppe ist (vorzugsweise aus $C_2$-$C_6$), die an Silizium gebunden ist, und der durchschnittlichen linearen Formel $M^wD_mM$, bei welcher M, $M^w$ und D Siloxymotive der Formel (I.1) sind, mit für M : a=0, b=3, $M^w$ : a=1, b=2 und für D: a=0, b=2; und m ist eine natürliche ganze Zahl gleich oder größer als 150;

→ ($A_{2.2}$) lange Silikonöle, umfassend jeweils zumindest ein lineares POS, das pro Molekül an jeder seiner Endgruppen eine Alkenylgruppe (vorzugsweise aus $C_2$-$C_6$) aufweist, die an Silizium gebunden ist, und der durchschnittlichen linearen Formel $M^wD_nM^w$, bei welcher $M^w$ und D Siloxymotive der Formel (I.1) sind, mit für $M^w$ : a=1, b=2 und für D: a=0, b=2; und n ist eine natürliche ganze Zahl gleich oder größer als 250; wobei die Viskosität v2 der Öle $A_{2.2}$ von 3000 bis 200000 mPa.s beträgt;

→ ($A_{2.3}$) "schwach" alkenylierte Silikonöle, umfassend jeweils zumindest ein lineares POS, das pro Molekül eine zumindest eine Alkenylgruppe (vorzugsweise aus $C_2$-$C_6$) aufweist, die an Silizium gebunden ist, und der durchschnittlichen linearen Formel $(M^w)_x(M)_y(D)_p(D^w)_{p'}$, bei welcher M, $M^w$ und D Siloxymotive der Formel (I.1) sind, mit für M: a=0, b=3, $M^w$ : a=1, b=2 und für D: a=0, b=2, $D^w$: a=1, b=1; p, p' sind ganze natürliche Zahlen; x,y=0, 1 oder 2, x+y=2, der Massenanteil $R^w$ (Gew.-%) der Alkenylmotive zur Gesamtmasse des POS $A_{2.3}$ ist kleiner oder gleich 0,5, vorzugsweise 0,3, noch besser 0,2;

→ und deren Mischungen;

12. Träger, vorzugsweise ein Polymerfilm, stärker bevorzugt ein Polyesterpolymerfillm, **dadurch gekennzeichnet, dass** er zumindest eine wasserabweisende Antihaftbeschichtung auf Basis einer durch Polyaddition vernetzten/gehärteten Silikonzusammensetzung aufweist, die enthält:

* (A) einen alkenylierten Silikonbestandteil, der zumindest ein funktionelles Silikonöl enthält, das zumindest ein PolyOrganoSiloxan (POS) umfasst, das Motive der Formel:

$$W_a Z_b SiO_{\frac{4-(a+b)}{2}} \qquad (I.1)$$

enthält, bei welcher:

- W unabhängig eine funktionelle Alkenylgruppe, vorzugsweise aus C2-C6, und noch stärker bevorzugt aus Vinyl und Allyl darstellt,
- Z unabhängig eine monovalente Kohlenwasserstoffgruppe ohne ungünstige Wirkung auf die Aktivität des Katalysators darstellt und vorzugsweise ausgewählt ist unter den Alkylgruppen, die von 1 bis 8 Kohlenstoffatome eingeschlossen haben, vorteilhafterweise unter Methyl-, Ethyl-, Propyl- und 3,3,3-Trifluorpropyl-Gruppen sowie unter Arylgruppen und vorteilhafterweise unter Xylyl- und Totyl-und Phenyl-Radikalen,
- a gleich 1 oder 2 ist, b gleich 0, 1 oder 2 ist und a + b von 1 bis 3 ist;
wobei der alkenylierte Silikonbestandteil einen Anteil F1 und einen Anteil F2 enthält, welche sich voneinander unterscheiden,
wobei der Anteil F1 zumindest ein alkenyliertes Silikonöl, das zumindest ein lineares POS umfasst, das pro Molekül zumindest zwei Alkenylgruppen (vorzugsweise aus $C_2$-$C_6$), die an Silizium gebunden sind, zeigt,
- der durchschnittlichen linearen Formel: $M^w_r(D)_q(D^w)_{q'}M_r$, bei welcher M und D Siloxymotive der Formel (I.1) sind, mit für M : a=0, b=3, für $M^w$ : a=1, b=2 und für D: a=0, b=2, $D^w$: a=1, b=1; q und q' sind natürliche ganze Zahlen, r,r'=0, 1 oder 2 mit r+r'=2;
- der Viskosität v4 (in mPa.s bei 25°C), die wie folgt definiert ist:
$75 \leq v4 \leq 4.000$, vorzugsweise $100 \leq v4 \leq 2.000$ und besser noch $100 \leq v4 \leq 1.000$
- und dem Massenanteil $R^w$ (Gew.-%) der Si-Alkenylmotive zur Gesamtmasse des POS des Anteils F1 des A, die wie folgt definiert ist:
$0,1 \leq R^w \leq 3,5$, vorzugsweise $0,2 \leq R^w \leq 3$, und noch besser $0,5 \leq R^w \leq 3$,
wobei F2 eine Aktivität des Fortschreitens der Haftung auf den Trägern (folglich der Abriebwiderstands) der Antihaftbeschichtungen, die durch Härtung/Vernetzung der Zusammensetzung erhalten sind, aufweisen,
und F2 sind aus zumindest einem alkenylierten Silikonöl gebildet, ausgewählt aus der Gruppe, die umfasst:

→ ($A_{2.1}$) monoalkenylierte Silikonöle, umfassend jeweils zumindest ein lineares POS, das pro Molekül ein einziges Ende aufweist, das Träger einer einzigen Alkenylgruppe ist (vorzugsweise aus $C_2$-$C_6$), die an Silizium gebunden ist, und der durchschnittlichen linearen Formel $M^wD_mM$, bei welcher M, $M^w$ und D Siloxymotive der Formel (I.1) sind, mit für M : a=0, b=3, $M^w$ : a=1, b=2 und für D: a=0, b=2; und m ist eine natürliche ganze Zahl gleich oder größer als 150;

→ ($A_{2.2}$) lange Silikonöle, umfassend jeweils zumindest ein lineares POS, das pro Molekül an jeder seiner Endgruppen eine Alkenylgruppe (vorzugsweise aus $C_2$-$C_6$) aufweist, die an Silizium gebunden ist, und der durchschnittlichen linearen Formel $M^wD_nM^w$, bei welcher $M^w$ und D Siloxymotive der Formel (I.1) sind, mit für $M^w$ : a=1, b=2 und für D: a=0, b=2; und n ist eine natürliche ganze Zahl gleich oder größer als 250; wobei die Viskosität v2 der Öle $A_{2.2}$ von 3000 bis 200000 mPa.s beträgt;

→ ($A_{2.3}$) "schwach" alkenylierte Silikonöle, umfassend jeweils zumindest ein lineares POS, das pro Molekül eine zumindest eine Alkenylgruppe (vorzugsweise aus $C_2$-$C_6$) aufweist, die an Silizium gebunden ist, und der durchschnittlichen linearen Formel $(M^w)_x(M)_y(D)_p(D^w)_{p'}$, bei welcher M, $M^w$ und D Siloxymotive der Formel (I.1) sind, mit für M: a=0, b=3, $M^w$ : a=1, b=2 und für D: a=0, b=2, $D^w$: a=1, b=1; p, p' sind ganze natürliche Zahlen; x,y=0, 1 oder 2, x+y=2, der Massenanteil $R^w$ (Gew.-%) der Alkenylmotive zur Gesamtmasse des POS $A_{2.3}$ ist kleiner oder gleich 0,5, vorzugsweise 0,3, noch besser 0,2;

→ und deren Mischungen;

* (B) zumindest ein Vernetzungssilikonöl, umfassend zumindest ein hydriertes POS, das pro Molekül zumindest drei an Silizium gebundene Wasserstoffatome aufweist;
* (C) zumindest einen Katalysator, zusammengesetzt aus zumindest einem Metall, das der Platingruppe angehört;
* (D) möglicherweise zumindest ein Kopplungsadditiv;
* (E) möglicherweise zumindest einen Vernetzungsinhibitor;
* (F) möglicherweise ein Adhäsionsmodulationssystem;
* (G) möglicherweise zumindest ein Verdünnungsmittel;
* (H) möglicherweise zumindest ein weiteres funktionelles Additiv, insbesondere ein Antibeschlagmittel bzw. anti-misting.

**EP 2 024 438 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4774111 B
- US 20040161618 A
- WO 2004046267 A
- US 4623700 A
- EP 0219720 B
- EP 0454130 A
- US 3220972 A
- US 3697473 A
- US 4340709 A
- US 3159601 A
- US 3159602 A
- EP 0057459 A
- EP 0188978 A
- EP 0190530 A
- US 3419593 A
- US 3715334 A
- US 3377432 A
- US 3814730 A
- US 4256870 A
- US 4476166 A
- US 4347346 A
- US 3989866 A
- US 4336364 A
- US 3445420 A
- FR 1528464 B
- FR 2372874 A
- FR 2450642 B
- US 3772247 B
- EP 0601938 A